# EUROPEAN PATENT SPECIFICATION

(11) **EP 1 954 457 B1**
(45) Date of publication and mention of the grant of the patent: **15.04.2009**
(21) Application number: 06819136.0
(22) Date of filing: 25.10.2006
(51) Int. Cl.: B27K 3/52, B27K 7/00

(54) **COLOR STABILIZATION OF CORK AND COLORED WOODS BY THE COMBINED USE OF INORGANIC AND ORGANIC UV-ABSORBERS**
FARBSTABILISIERUNG VON KORK UND GEFÄRBTEN HÖLZERN DURCH DIE KOMBINIERTE VERWENDUNG VON ANORGANISCHEN UND ORGANISCHEN UV-ABSORBERN
STABILISATION DE LA COULEUR DU LIEGE ET DE BOIS COLORES PAR UTILISATION COMBINEE D'ABSORBEURS D'UV ORGANIQUES ET MINERAUX

(30) Priority: 04.11.2005 EP 05110331
(43) Date of publication of application: 13.08.2008
(73) Proprietor: Ciba Holding Inc., 4057 Basel (CH)
(72) Inventor: SCHALLER, Christian Marcus, CH-4057 Basel (CH); MEYER, Raphael, CH-4123 Allschwil (CH)
(86) International application number: PCT/EP2006/067743
(87) International publication number: WO 2007/051741

(56) References cited:
- EP-A- 0 943 665
- EP-A2- 0 440 580
- WO-A-20/04094120
- US-A- 4 505 986

## Description

The instant invention relates to a method for the color stabilization of cork and specific dark woods by the combined use of a small amount of inorganic UV-absorbers and an excess of organic UV-absorbers in a protective coating. A further aspect of the invention is the use of such a UV-absorber combination for the color stabilization of cork and specific colored woods.

For example cork panels are typically used in kitchens and bathrooms for flooring. They are typically covered by coatings to protect them from humidity, mechanical impacts and light. These colored cork specimens are very sensitive to UV and visible light. Light causes a bleaching of the initial coloration, resulting in an unwished whitish/grayish appearance: This effect is also known for other colored or dark wood species, such as beech, alder, meranti, oak, cherry, teak, nut, redwood, mahogany, eucalyptus, american beech, durian, red cedar, leichhardt tree, champa, rubberwood, taiwan ash, campher tree, zebra wood, makha, rosewood, rain tree and ironwood.

The problem can not be solved by the single use of organic UV absorbers, such as benzophenone, benzotriazole or triazine UV absorbers which protect only in the UV-A and UV-B region. The visible light still bleaches the natural colorants in the cork/wood species.

UV absorbers for the visible area, which screen a part of the visible light, are in general pigments. However, when pigments are used alone they have to be used in an effective amount and thereby impart their inherent color and opacity to the coating.

WO 2005/005114 suggests a pretreatment of wood in general with specific hydroxy or nitroxy groups containing tetramethylpiperidines and applying then a coating over the wood panels, which contains transparent inorganic oxides. However the amounts of transparent oxides needed are too high and impart an undesired color to the substrate. Cork and specific dark wood species are not mentioned.

The present invention provides a solution for this problem. It has been found that combinations of organic UV-Absorbers and small amounts of transparent inorganic oxides, such as iron oxides, micronized titanium dioxide, zinc oxide, cerium oxide or carbon black show synergistic effects in terms of color stabilization after light exposure without essentially affecting the initial color.

One aspect of the instant invention is a method for protecting cork or wood substrates from discoloration wherein the wood substrate is selected from the group consisting of beech, alder, meranti, oak, cherry, teak, nut, redwood, mahogany, eucalyptus, american beech, durian, red cedar, leichhardt tree, champa, rubberwood, taiwan ash, campher tree, zebra wood, makha, rosewood, rain tree and ironwood;
comprising, applying to the cork or wood substrate a coating, which coating contains
a) an organic UV-absorber selected from the group consisting of the hydroxybenzophenone, hydroxyphenylbenzotriazole, oxanilide and hydroxyphenyltriazine UV-absorbers or mixtures thereof; and
b) an inorganic UV-absorber selected from the group consisting of transparent iron oxide, transparent titanium dioxide, transparent zinc oxide, transparent cerium oxide and carbon black or mixtures thereof; wherein
   the weight ratio of organic UV-absorber to inorganic UV-absorber is from 1000:1 to 10:1.

For instance the substrate is selected from the group consisting of beech, alder, meranti, oak, cherry, teak, nut redwood and mahogany.

For example the substrate is cork or alder.

Preferably the substrate is cork.

Typically the substrate is in the form of a panel or board, which is used in indoor applications, such as flooring. It is, however, also possible to use it in outdoor applications.

Preferably the inorganic UV-absorber is a transparent iron oxide or carbon black or a mixture thereof.

The inorganic pigments may be present, for example, in the form of nano-particles.

The iron oxides typically have a yellow, red or brown shade. The crystal forms are typically of goethite, hematite structure or mixtures thereof. The particle size is typically 50-100 nm in length, 10-20 nm wide and 2-5 nm thick. The specific surfaces measured according to BET are usually higher than 60 m² / g.

Alternatively titaniumdioxide may be used, preferably as rutile structure.

In general iron oxides are preferred.

The transparent inorganic pigments are items of commerce. They are produced and sold for example under the trade name Sicotrans® by BASF, under the trade name Hombitec RM® by Sachtleben, under the Tradename Rhodigard® W 200, Rhodigard® S 100 by Rhodia and under the trade name ZinClear® by Advanced Powder Technology Pty Ltd.

Preferred is a method wherein the hydroxybenzophenone is of formula I 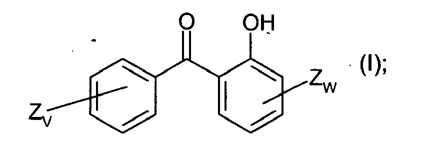 the 2-hydroxyphenylbenzotriazole is of formula IIa, IIb or IIc 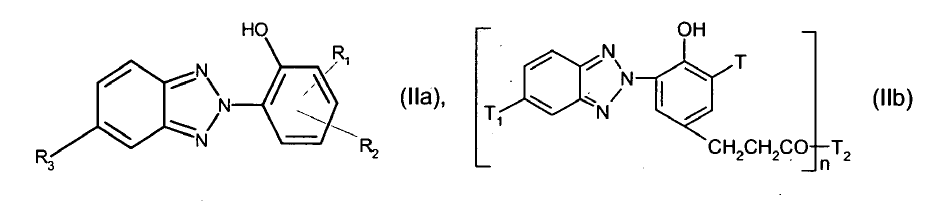 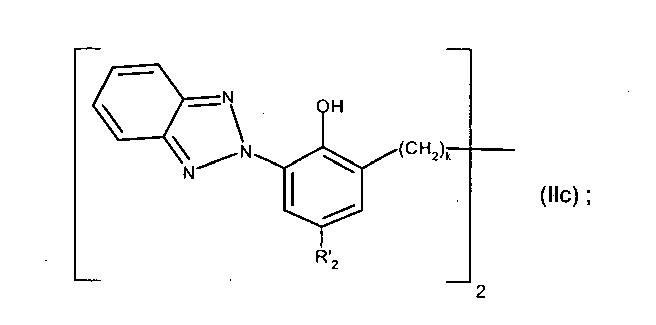 the 2-hydroxyphenyltriazine is of formula III 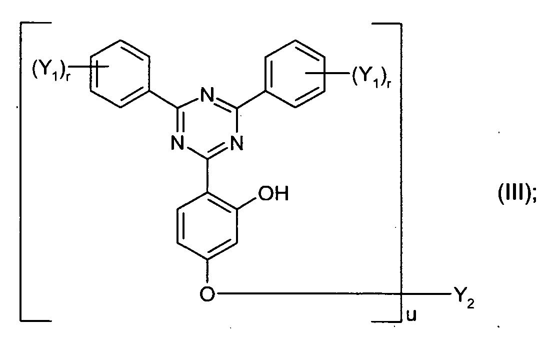 and the oxanilide is of formula (IV) 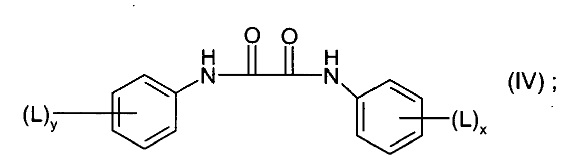 wherein
in the compounds of the formula (I) v is an integer from 1 to 3 and w is 1 or 2 and the substituents Z independently of one another are hydrogen, halogen, hydroxyl or alkoxy having 1 to 12 carbon atoms;
in the compounds of the formula (IIa),
R₁ is hydrogen, alkyl having 1 to 24 carbon atoms, phenylalkyl having 1 to 4 carbon atoms in the alkyl moiety, cycloalkyl having 5 to 8 carbon atoms or a radical of the formula 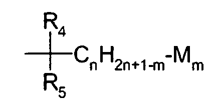 in which
R₄ and R₅ independently of one another are alkyl having in each case 1 to 5 carbon atoms, or R₄, together with the radical CₙH₂ₙ₊₁₋ₘ, forms a cycloalkyl radical having 5 to 12 carbon
atoms,
m is 1 or 2, n is an integer from 2 to 20 and
M is a radical of the formula -COOR₆ in which
R₆ is hydrogen, alkyl having 1 to 12 carbon atoms, alkoxyalkyl having in each case 1 to 20 carbon atoms in the alkyl moiety and in the alkoxy moiety or phenylalkyl having 1 to 4 carbon atoms in the alkyl moiety,
R₂ is hydrogen, halogen, alkyl having 1 to 18 carbon atoms, and phenylalkyl having 1 to 4 carbon atoms in the alkyl moiety, and
R₃ is hydrogen, chlorine, alkyl or alkoxy having in each case 1 to 4 carbon atoms or -COOR₆ in which R₆ is as defined above, at least one of the radicals R₁ and R₂ being other than hydrogen;
in the compounds of the formula (IIb)
T is hydrogen or alkyl having 1 to 6 carbon atoms,
T₁ is hydrogen, chlorine or alkyl or alkoxy having in each case 1 to 4 carbon atoms,
n is 1 or 2 and,
if n is 1,
T₂ is chlorine or a radical of the formula -OT₃ or 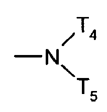 and,
if n is 2, T₂ is a radical of the formula 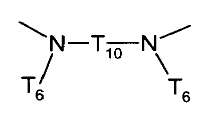 or -O-T₉-O-;
in which
T₃ is hydrogen, alkyl which has 1 to 18 carbon atoms and is unsubstituted or substituted by 1 to 3 hydroxyl groups or by -OCOT₆, alkyl which has 3 to 18 carbon atoms, is interrupted once or several times by -O- or -NT₆- and is unsubstituted or substituted by hydroxyl or -OCOT₆, cycloalkyl which has 5 to 12 carbon atoms and is unsubstituted or substituted by hydroxyl and/or alkyl having 1 to 4 carbon atoms, alkenyl which has 2 to 18 carbon atoms and is unsubstituted or substituted by hydroxyl, phenylalkyl having 1 to 4 carbon atoms in the alkyl
moiety, or a radical of the formula -CH₂CH(OH)-T₇ or 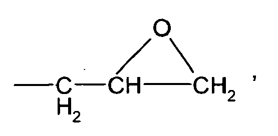 T₄ and T₅ independently of one another are hydrogen, alkyl having 1 to 18 carbon atoms, alkyl which has 3 to 18 carbon atoms and is interrupted once or several times by -O- or -NT₆-, cycloalkyl having 5 to 12 carbon atoms, phenyl, phenyl which is substituted by alkyl having 1 to 4 carbon atoms, alkenyl having 3 to 8 carbon atoms, phenylalkyl having 1 to 4 carbon atoms in the alkyl moiety or hydroxyalkyl having 2 to 4 carbon atoms,
T₆ is hydrogen, alkyl having 1 to 18 carbon atoms, cycloalkyl having 5 to 12 carbon atoms, alkenyl having 3 to 8 carbon atoms, phenyl, phenyl which is substituted by alkyl having 1 to 4 carbon atoms, phenylalkyl having 1 to 4 carbon atoms in the alkyl moiety,
T₇ is hydrogen, alkyl having 1 to 18 carbon atoms, phenyl which is unsubstituted or substituted by hydroxyl, phenylalkyl having 1 to 4 carbon atoms in the alkyl moiety, or - CH₂OT_{8,}
T₈ is alkyl having 1 to 18 carbon atoms, alkenyl having 3 to 8 carbon atoms, cycloalkyl having 5 to 10 carbon atoms, phenyl, phenyl which is substituted by alkyl having 1 to 4 carbon atoms, or phenylalkyl having 1 to 4 carbon atoms in the alkyl moiety,
T₉ is alkylene having 2 to 8 carbon atoms, alkenylene having 4 to 8 carbon atoms, alkynylene having 4 carbon atoms, cyclohexylene, alkylene which has 2 to 8 carbon atoms and is interrupted once or several times by -O-, or a radical of the formula - CH₂CH(OH)CH₂OT₁₁OCH₂CH(OH)CH₂- or -CH₂-C(CH₂OH)₂-CH₂-,
T₁₀ is alkylene which has 2 to 20 carbon atoms and can be interrupted once or several times by -O-, or cyclohexylene,
T₁₁ is alkylene having 2 to 8 carbon atoms, alkylene which has 2 to 18 carbon atoms and is interrupted once or several times by -O-, 1,3-cyclohexylene, 1,4-cyclohexylene, 1,3-phenylene or 1,4-phenylene, or
T₁₀ and T₆, together with the two nitrogen atoms, are a piperazine ring;
in the compounds of formula (IIc)
R'₂ is C₁-C₁₂alkyl and k is a number from 1 to 4;
in the compounds of the formula (III)
u is 1 or 2 and r is an integer from 1 to 3, the substituents
Y₁ independently of one another are hydrogen, hydroxyl, phenyl or halogen, halogenomethyl, alkyl having 1 to 12 carbon atoms, alkoxy having 1 to 18 carbon atoms, alkoxy having 1 to 18 carbon atoms which is substituted by a group -COO(C₁-C₁₈alkyl);
if u is 1,
Y₂ is alkyl having 1 to 18 carbon atoms, phenyl which is unsubstituted or substituted by hydroxyl, halogen, alkyl or alkoxy having 1 to 18 carbon atoms;
alkyl which has 1 to 12 carbon atoms and is substituted by -COOH, -COOY₈, -CONH₂, -CONHY₉, -CONY₉Y₁₀, -NH₂, -NHY₉, -NY₉Y₁₀, -NHCOY₁₁, -CN and/or -OCOY₁₁;
alkyl which has 4 to 20 carbon atoms, is interrupted by one or more oxygen atoms and is unsubstituted or substituted by hydroxyl or alkoxy having 1 to 12 carbon atoms, alkenyl having 3 to 6 carbon atoms, glycidyl, cyclohexyl which is unsubstituted or substituted by hydroxyl, alkyl having 1 to 4 carbon atoms and/or -OCOY₁₁, phenylalkyl which has 1 to 5 carbon atoms in the alkyl moiety and is unsubstituted or substituted by hydroxyl, chlorine and/or methyl, -COY₁₂ or -SO₂Y₁₃, or,
if u is 2,
Y₂ is alkylene having 2 to 16 carbon atoms, alkenylene having 4 to 12 carbon atoms, xylylene, alkylene which has 3 to 20 carbon atoms, is interrupted by one or more -O- atoms and/or is substituted by hydroxyl, -CH₂CH(OH)CH₂-O-Y₁₅-OCH₂CH(OH)CH₂, -CO-Y₁₆-CO-, -CO-NH-Y₁₇-NH-CO- or -(CH₂)ₘ-CO₂-Y₁₈-OCO-(CH₂)ₘ, in which
m is 1, 2 or 3,
Y₈ is alkyl having 1 to 18 carbon atoms, alkenyl having 3 to 18 carbon atoms, alkyl which has 3 to 20 carbon atoms, is interrupted by one or more oxygen or sulfur atoms or -NT₆- and/or is substituted by hydroxyl, alkyl which has 1 to 4 carbon atoms and is substituted by -P(O)(OY₁₄-)₂, -NY₉Y₁₀ or -OCOY₁₁ and/or hydroxyl, alkenyl having 3 to 18 carbon atoms, glycidyl, or phenylalkyl having 1 to 5 carbon atoms in the alkyl moiety,
Y₉ and Y₁₀ independently of one another are alkyl having 1 to 12 carbon atoms, alkoxyalkyl having 3 to 12 carbon atoms, dialkylaminoalkyl having 4 to 16 carbon atoms or cyclohexyl having 5 to 12 carbon atoms, or Y₉ and Y₁₀ together are alkylene, oxaalkylene or azaalkylene having in each case 3 to 9 carbon atoms,
Y₁₁ is alkyl having 1 to 18 carbon atoms, alkenyl having 2 to 18 carbon atoms or phenyl,
Y₁₂ is alkyl having 1 to 18 carbon atoms, alkenyl having 2 to 18 carbon atoms, phenyl, alkoxy having 1 to 12 carbon atoms, phenoxy, alkylamino having 1 to 12 carbon atoms or phenylamino,
Y₁₃ is alkyl having 1 to 18 carbon atoms, phenyl or alkylphenyl having 1 to 8 carbon atoms in the alkyl radical,
Y₁₄ is alkyl having 1 to 12 carbon atoms or phenyl,
Y₁₅ is alkylene having 2 to 10 carbon atoms, phenylene or a group -phenylene-M-phenylene- in which M is -O-, -S-, -SO₂-, -CH₂- or -C(CH₃)₂-,
Y₁₆ is alkylene, oxaalkylene or thiaalkylene having in each case 2 to 10 carbon atoms, phenylene or alkenylene having 2 to 6 carbon atoms,
Y₁₇ is alkylene having 2 to 10 carbon atoms, phenylene or alkylphenylene having 1 to 11 carbon atoms in the alkyl moiety, and
Y₁₈ is alkylene having 2 to 10 carbon atoms or alkylene which has 4 to 20 carbon atoms and is interrupted once or several times by oxygen;

in the compounds of the formula (IV) x is an integer from 1 to 3 and the substituents L independently of one another are hydrogen, alkyl, alkoxy or alkylthio having in each case 1 to 22 carbon atoms, phenoxy or phenylthio.

C₁-C₁₈alkyl may be linear or branched. Examples of alkyl having up to 18 carbon atoms are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl and octadecyl.

In the compounds of the formula (IIa) R₁ can be hydrogen or alkyl having 1 to 24 carbon atoms, such as methyl, ethyl, propyl, butyl, hexyl, octyl, nonyl, dodecyl, tetradecyl, hexadecyl, octadecyl, nonadecyl and eicosyl and also corresponding branched isomers. Furthermore, in addition to phenylalkyl having 1 to 4 carbon atoms in the alkyl moiety, for example benzyl, R₁ can also be cycloalkyl having 5 to 8 carbon atoms, for example cyclopentyl, cyclohexyl and cyclooctyl, or a radical of the formula 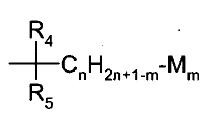 in which R₄ and R₅ independently of one another are alkyl having in each case 1 to 5 carbon atoms, in particular methyl, or R₄, together with the CₙH₂ₙ₊₁₋ₘ radical, forms a cycloalkyl radical having 5 to 12 carbon atoms, for example cyclohexyl, cyclooctyl and cyclodecyl. M is a radical of the formula -COOR₆ in which R₆ is not only hydrogen but also alkyl having 1 to 12 carbon atoms or alkoxyalkyl having 1 to 20 carbon atoms in each of the alkyl and alkoxy moieties. Suitable alkyl radicals R₆ are those enumerated for R₁. Examples of suitable alkoxyalkyl groups are -C₂H₄OC₂H₅, -C₂H₄OC₈H₁₇ and -C₄H₈OC₄H₉. As phenylalkyl having 1 to 4 carbon atoms, R₆ is, for example, benzyl, cumyl, α-methylbenzyl or phenylbutyl.

In addition to hydrogen and halogen, for example chlorine and bromine, R₂ can also be alkyl having 1 to 18 carbon atoms. Examples of such alkyl radicals are indicated in the definitions of R₁. R₂ can also be phenylalkyl having 1 to 4 carbon atoms in the alkyl moiety, for example benzyl, a-methylbenzyl and cumyl.

Halogen as a substituent means in all cases fluorine, chlorine, bromine or iodine, preferably chlorine or bromine and more preferably chlorine.

At least one of the radicals R₁ and R₂ must be other than hydrogen.

In addition to hydrogen or chlorine, R₃ is also alkyl or alkoxy having in each case 1 to 4 carbon atoms, for example methyl, butyl, methoxy and ethoxy, and also -COOR₆.

In the compounds of the formula (IIb) T is hydrogen or alkyl having 1 to 6 carbon atoms, such as methyl and butyl, T₁ is not only hydrogen or chlorine, but also alkyl or alkoxy having in each case 1 to 4 carbon atoms, for example methyl, methoxy and butoxy, and, if n is 1, T₂ is chlorine or a radical of the formula -OT₃ or -NT₄T₅. T₃ is here hydrogen or alkyl having 1 to 18 carbon atoms (cf. the definition of R₁). These alkyl radicals can be substituted by 1 to 3 hydroxyl groups or by a radical -OCOT₆. Furthermore, T₃ can be alkyl having 3 to 18 carbon atoms (cf. the definition of R₁) which is interrupted once or several times by -O- or -NT₆- and is unsubstituted or substituted by hydroxyl or -OCOT₆. Examples of T₃ as cycloalkyl are cyclopentyl, cyclohexyl or cyclooctyl. T₃ can also be alkenyl having 2 to 18 carbon atoms. Suitable alkenyl radicals are derived from the alkyl radicals enumerated in the definitions of R₁. These alkenyl radicals can be substituted by hydroxyl. Examples of T₃ as phenylalkyl are benzyl, phenylethyl, cumyl, α-methylbenzyl or benzyl. T₃ can also be a radical of the formula

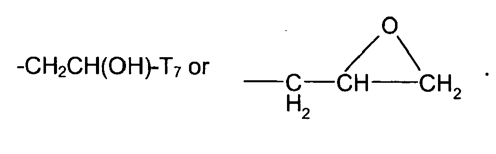

Like T₃, T₄ and T₅ can, independently of one another, be not only hydrogen but also alkyl having 1 to 18 carbon atoms or alkyl which has 3 to 18 carbon atoms and is interrupted once or several times by -O- or -NT₆-. T₄ and T₅ can also be cycloalkyl having 5 to 12 carbon atoms, for example cyclopentyl, cyclohexyl and cyclooctyl. Examples of T₄ and T₅ as alkenyl groups can be found in the illustrations of T₃. Examples of T₄ and T₅ as phenylalkyl having 1 to 4 carbon atoms in the alkyl moiety are benzyl or phenylbutyl. Finally, these substituents can also be hydroxyalkyl having 1 to 3 carbon atoms.

If n is 2, T₂ is a divalent radical of the formula 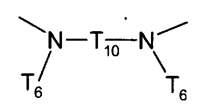 or -O-T₉-O-.

In addition to hydrogen, T₆ (see above also) is alkyl, cycloalkyl, alkenyl, aryl or phenylalkyl; examples of such radicals have already been given above.

In addition to hydrogen and the phenylalkyl radicals and long-chain alkyl radicals mentioned above, T₇ can be phenyl or hydroxyphenyl and also -CH₂OT₈ in which T₈ can be one of the alkyl, alkenyl, cycloalkyl, aryl or phenylalkyl radicals enumerated.

The divalent radical T₉ can be alkylene having 2 to 8 carbon atoms, and such radicals can also be branched. This also applies to the alkenylene and alkynylene radicals T₉. As well as cyclohexylene, T₉ can also be a radical of the formula - CH₂CH(OH)CH₂OT₁₁OCH₂CH(OH)CH₂- or -CH₂-C(CH₂OH)₂-CH₂-.

T₁₀ is a divalent radical and, in addition to cyclohexylene, is also alkylene which has 2 to 20 carbon atoms and which can be interrupted once or several times by -O-. Suitable alkylene radicals are derived from the alkyl radicals mentioned in the definitions of R₁.

T₁₁ is also an alkylene radical. It contains 2 to 8 carbon atoms or, if it is interrupted once or several times by -O-, 4 to 10 carbon atoms. T₁₁ is also 1,3-cyclohexylene, 1,4-cyclohexylene, 1,3-phenylene or 1,4-phenylene.

Together with the two nitrogen atoms, T₆ and T₁₀ can also be a piperazine ring.

Examples of alkyl, alkoxy, phenylalkyl, alkylene, alkenylene, alkoxyalkyl and cycloalkyl radicals and also alkylthio, oxaalkylene or azoalkylene radicals in the compounds of the formulae (I), (IIa), (IIb), (IIc), (III) and IV) can be deduced from the above statements.

Within the benzotriazole UV-absorbers those according to formula IIa are in general preferred.

The UV absorbers of the formulae (I), (IIa), (IIb), (IIc), (III) and (IV) are known per se and are described, together with their preparation in, for example, WO 96/28431, EP-A-323 408, EP-A-57 160, US 5 736 597 (EP-A-434 608), US 4 619 956, DE-A 31 35 810 and GB-A 1 336 391. Preferred meanings of substituents and individual compounds can be deduced from the documents mentioned.

In another embodiment the UV-absorbers of the class of hydroxyphenyl triazines are of formula (IIIa) 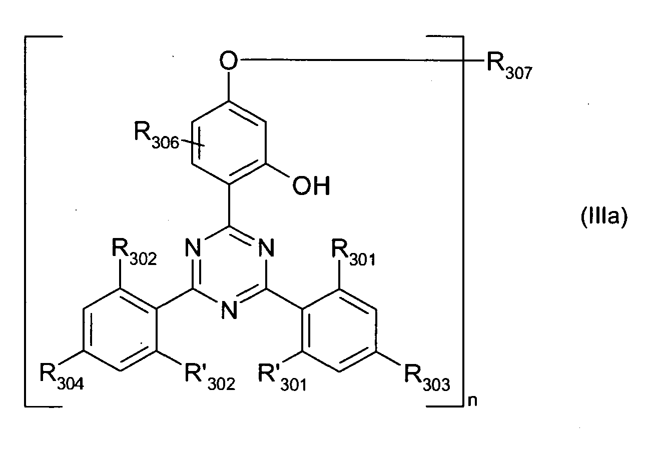 in which n is 1 or 2;
R₃₀₁, R'₃₀₁, R₃₀₂ and R'_{302,} independently of one another, are H, OH, C₁-C₁₂alkyl; C₂-C₆alkenyl; C₁-C₁₂alkoxy; C₂₋C₁₈alkenoxy; halogen; trifluoromethyl; C₇-C₁₁phenylalkyl; phenyl; phenyl which is substituted by C₁-C₁₈alkyl, C₁-C₁₈alkoxy or halogen; phenoxy; or phenoxy which is substituted by C₁-C₁₈alkyl, C₁-C₁₈alkoxy or halogen;
R₃₀₃ and R₃₀₄, independently of one another, are H, C₁-C₁₂alkyl; OR'₃₀₇; C₂-C₆alkenyl; C₂-C₁₈alkenoxy; halogen; trifluoromethyl; C₇-C₁₁phenylalkyl; phenyl; phenyl which is substituted by C₁-C₁₈alkyl, C₁-C₁₈alkoxy or halogen; phenoxy; or phenoxy which is substituted by C₁-C₁₈alkyl, C₁-C₁₈alkoxy or halogen;
R₃₀₆ is hydrogen, C₁-C₂₄alkyl, C₅-C₁₂cycloalkyl or C₇-C₁₅phenylalkyl;
R₃₀₇, in the case where n = 1, and R'₃₀₇, independently of one another, are hydrogen or C₁-C₁₈alkyl; or are C₁-C₁₂alkyl which is substituted by OH, C₁-C₁₈alkoxy, allyloxy, halogen, -COOH, -COOR₃₀₈, -CONH₂, -CONHR₃₀₉, -CON(R₃₀₉)(R₃₁₀), -NH₂, -NHR₃₀₉, -N(R₃₀₉)(R₃₁₀), -NHCOR₃₁₁, -CN, -OCOR₃₁₁, phenoxy and/or phenoxy which is substituted by C₁-C₁₈alkyl, C₁-C₁₈alkoxy or halogen; or R₃₀₇ is C₃-C₅₀alkyl which is interrupted by -O- and may be substituted by OH; or R₇ is C₃-C₆alkenyl; glycidyl; C₅-C₁₂cycloalkyl which is substituted by OH, C₁-C₄alkyl or -OCOR₃₁₁; C₇-C₁₁phenylalkyl which is unsubstituted or substituted by OH, Cl or CH₃; -CO-R₃₁₂ or -SO₂-R₃₁₃;
R₃₀₇, in the case where n = 2, is C₂-C₁₆alkylene, C₄-C₁₂alkenylene, xylylene, C₃-C₂₀alkylene which is interrupted by O and/or substituted by OH, or is a group of the formula -CH₂CH(OH)CH₂O-R₃₂₀-OCH₂CH(OH)CH₂-, -CO-R₃₂₁-CO-, -CO-NH-R₃₂₂-NH-CO- or -(CH₂)ₘ-COO-R₃₂₃-OOC-(CH₂)ₘ-, in which m is a number in the range from 1 to 3, or is 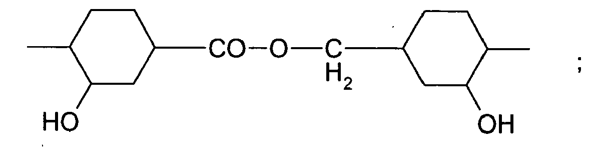 R₃₀₈ is C₁-C₁₈alkyl; C₂-C₁₈alkenyl; hydroxyethyl; C₃-C₅₀alkyl which is interrupted by O, NH, NR₃₀₉ or S and/or is substituted by OH; C₁-C₄alkyl which is substituted by -P(O)(OR₃₁₄)₂, -N(R₃₀₉)(R₃₁₀) or-OCOR₃₁₁ and/or OH; glycidyl; C₅-C₁₂cycloalkyl; phenyl; C₇-C₁₄alkylphenyl or C₇-C₁₁phenylalkyl;
R₃₀₉ and R₃₁₀, independently of one another, are C₁-C₁₂alkyl; C₃-C₁₂alkoxyalkyl; C₄-C₁₆dialkylaminoalkyl or C₅-C₁₂cycloalkyl, or R₃₀₉ and R₃₁₀ together are C₃-C₉alkylene or -oxaalkylene or -azaalkylene;
R₃₁₁ is C₁-C₁₈alkyl; C₂-C₁₈alkenyl or phenyl; C₂-C₁₂hydroxyalkyl; cyclohexyl; or is C₃-C₅₀alkyl which is interrupted by -O- and may be substituted by OH;
R₃₁₂ is C₁-C₁₈alkyl; C₂-C₁₈alkenyl; phenyl; C₁-C₁₈alkoxy; C₃-C₁₈alkenyloxy; C₃-C₅₀alkoxy which is interrupted by O, NH, NR₃₀₉ or S and/or substituted by OH; cyclohexyloxy; C₇-C₁₄alkylphenoxy; C₇-C₁₁phenylalkoxy; phenoxy; C₁-C₁₂alkylamino; phenylamino; tolylamino or naphthylamino;
R₃₁₃ is C₁-C₁₂alkyl; phenyl; naphthyl or C₇-C₁₄alkylphenyl;
R₃₁₄ is C₁-C₁₂alkyl, methylphenyl or phenyl;
R₃₂₀ is C₂-C₁₀alkylene; C₄-C₅₀alkylene which is interrupted by O, phenylene or a -phenylene-X-phenylene- group, in which X is -O-, -S-, -SO₂-, -CH₂- or -C(CH₃)₂-;
R₃₂₁ is C₂-C₁₀alkylene, C₂-C₁₀oxaalkylene, C₂-C₁₀thiaalkylene, C₆-C₁₂arylene or C₂-C₆alkenylene;
R₃₂₂ is C₂-C₁₀alkylene, phenylene, tolylene, diphenylenemethane or a 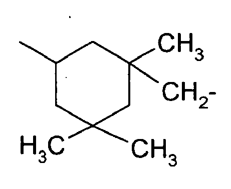 group; and
R₃₂₃ is C₂-C₁₀alkylene or C₄-C₂₀alkylene which is interrupted by O.

Halogen is in all cases fluorine, chlorine, bromine or iodine.

Examples of alkyl are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl.

Examples of alkoxy having up to 12 carbon atoms are methoxy, ethoxy, propoxy, isopropoxy, butoxy, isobutoxy, pentoxy, isopentoxy, hexoxy, heptoxy, octoxy, decyloxy, dodecyloxy.

Examples of alkenoxy are propenyloxy, butenyloxy, pentenyloxy and hexenyloxy.

Examples of C₅-C₁₂cycloalkyl are cyclopentyl, cyclohexyl, cycloheptyl, cyclooctyl and cyclododecyl. C₅-C₈Cycloalkyl, especially cyclohexyl, is preferred.

C₁-C₄Alkyl-substituted C₅-C₁₂cycloalkyl is for example methylcyclohexyl or dimethylcyclohexyl.

OH- and/or C₁-C₁₀alkyl-substituted phenyl is for example methylphenyl, dimethylphenyl, trimethylphenyl, tert-butylphenyl or 3,5-di-tert-butyl-4-hydroxyphenyl.

Alkoxy-substituted phenyl is for example methoxyphenyl dimethoxyphenyl or trimethoxyphenyl.

Examples of C₇-C₉phenylalkyl are benzyl and phenylethyl.

C₇-C₉Phenylalkyl which is substituted on the phenyl radical by -OH and/or by alkyl having up to 10 carbon atoms is for example methylbenzyl, dimethylbenzyl, trimethylbenzyl, tert-butylbenzyl or 3,5-di-tert-butyl-4-hydroxybenzyl.

Examples of alkenyl are allyl, 2-methallyl, butenyl, pentenyl and hexenyl. Allyl is preferred. The carbon atom in position 1 is preferably saturated.

Examples of alkylene are methylene, ethylene, propylene, trimethylene, tetramethylene, pentamethylene, 2,2-dimethyltrimethylene, hexamethylene, trimethylhexamethylene, octamethylene and decamethylene.

Examples of alkenylene are butenylene, pentenylene and hexenylene.

C₆-C₁₂ arylene is preferably phenylene.

Alkyl interrupted by O is for example -CH₂-CH₂-O-CH₂-CH₃, -CH₂-CH₂-O-CH₃- or -CH₂-CH₂-O-CH₂-CH₂-CH₂-O-CH₂-CH₃-. It is preferably derived from polyethlene glycol. A general description is -((CH₂)ₐ-O)_{b}-H/CH₃, wherein a is a number from 1 to 6 and b is a number from 2 to 10.

C₂-C₁₀ oxaalkylene and C₂-C₁₀thiaalkylene can be deduced from the above mentioned alkylene groups by substituting one or more carbon atoms by an oxygen atom or a sulphur atom.

Specific examples of 2-hydroxybenzophenones are for example the 4-hydroxy, 4-methoxy, 4-octyloxy, 4-decyloxy, 4-dodecyloxy, 4-benzyloxy and 2'-hydroxy-4,4'-dimethoxy derivatives.

Specific examples of 2-(2'-hydroxyphenyl)benzotriazoles are for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO-CH₂CH₂⁆₂ where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]benzotriazole; 2-[2'-hydroxy-3'-(1,1,3,3-tetramethylbutyl)-5'-(α,α-dimethylbenzyl)-phenyl]benzotriazole.

Specific examples of 2-(2-hydroxyphenyl)-1,3,5-triazines are for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-(4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine and 2-(2-hydroxy-4-(2-ethylhexyl)oxy)phenyl-4,6-di(4-phenyl)phenyl-1,3,5-triazine.

For instance the hydroxyphenyl-triazine UV-absorbers are of formulae: 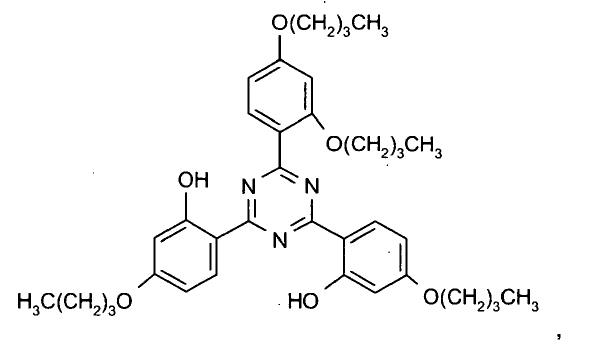 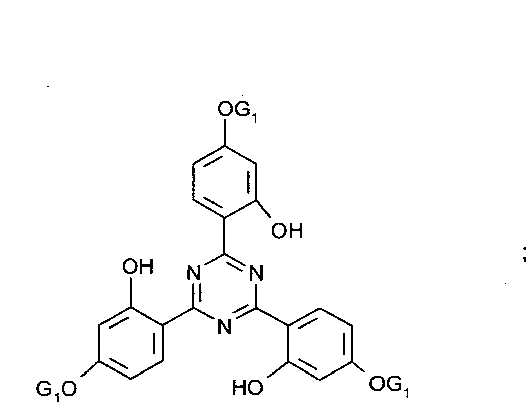 G1= CH(CH₃)-COO-C₂H₅, 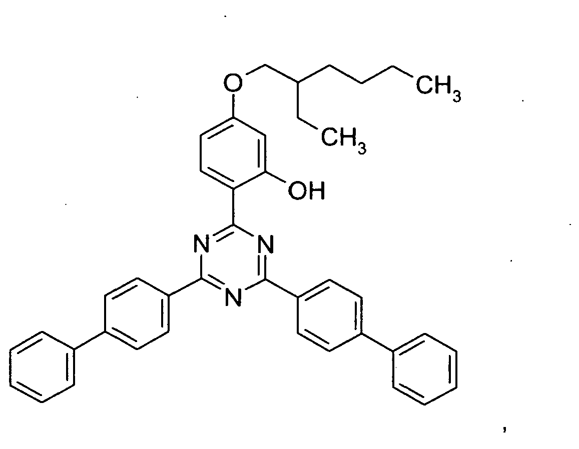 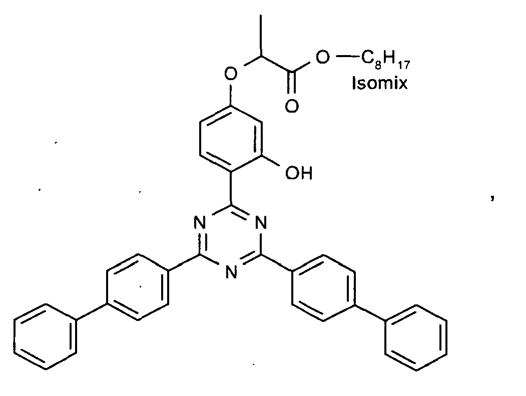 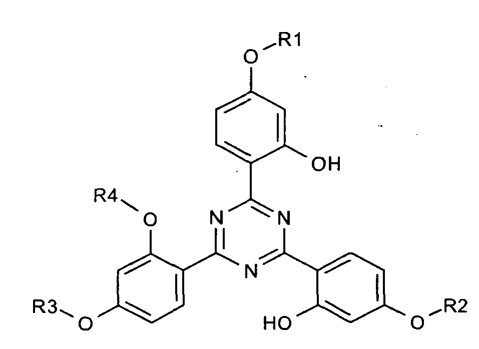 = a mixture of
a) R1 = R2 = CH(CH₃)-COO-C₈H₁₇, R3= R4 =H;
b) R1 = R2 = R3 = CH(CH₃)-COO-C₈H₁₇, R4 =H;
c) R1 = R2 = R3 = R4 = CH(CH₃)-COO-C₈H₁₇,

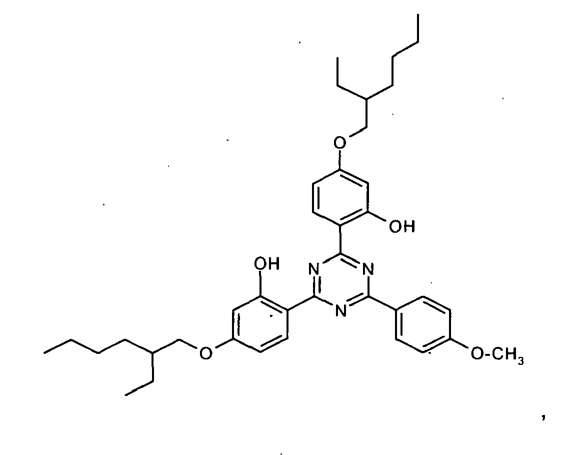

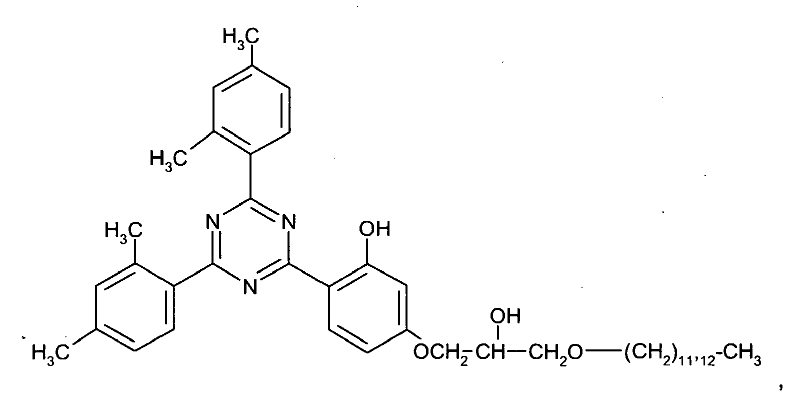

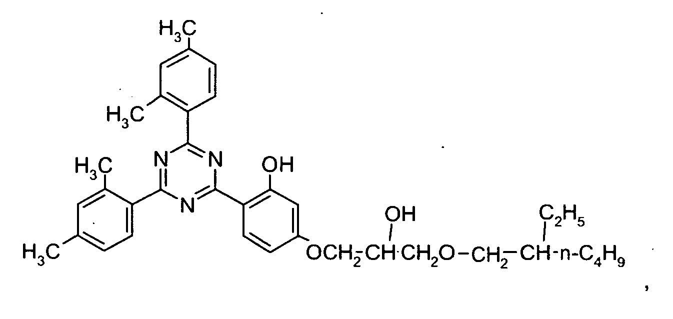

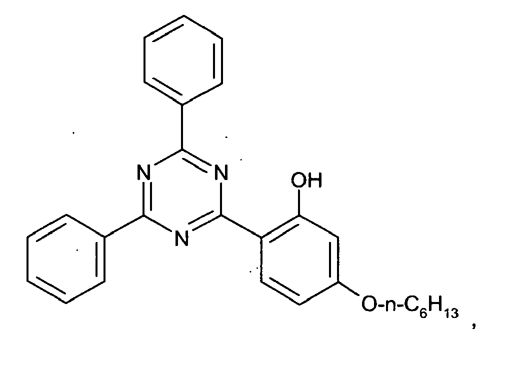

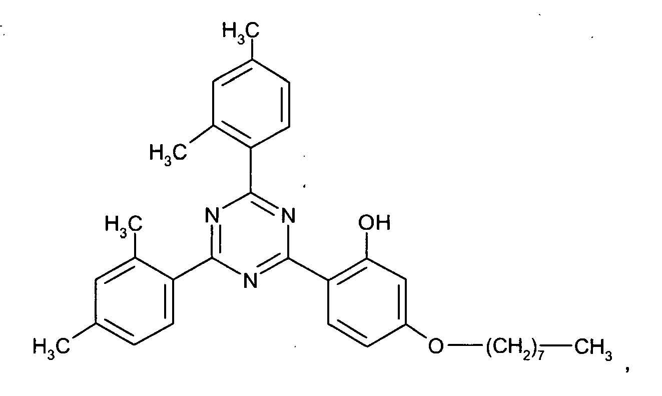

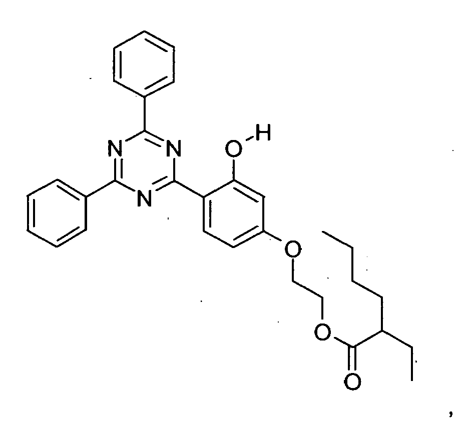

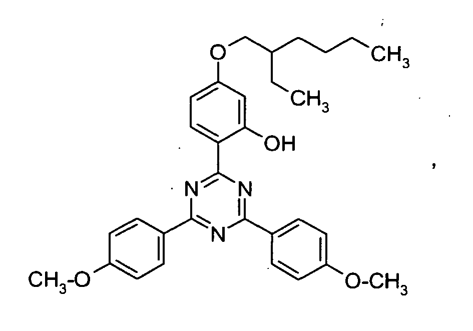

The hydroxyphenyl triazine UV-absorbers are known and partially items of commerce. They can be prepared according to the above documents.

Specific examples for oxamides are for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

The above mentioned UV-absorbers are largely items of commerce and for example known as Tinuvin® 109, 171, 326, 327, 328, 350, 360, 384, 400, 405, 411 or Chimassorb® 81 from Ciba Specialty Chemicals or Cyasorb® 1164 from Cytech Inc.

In many cases it may be of advantage to use a combination of UV-absorbers from different classes, such as for example a benzophenone UV-absorber with a benzotriazole UV-absorber or a hydroxyphenyltriazine UV-absorber with a benzotriazole UV-absorber. If such a combination is used, the weight ratio between both UV-absorbers is for example from 1:5 to 5:1, for instanc from 1:3 to 3:1, particularly 1:1.5 to 1.5:1.

When a water based coating is applied the organic UV-absorber is advantageously in the form of concentrated aqueous polymer dispersion with a particle size of less than 1000 nm, prepared by heterophase radical polymerization of ethylenically unsaturated monomers in the presence of the UV-absorber. Such preparations are, for example, described in WO 05/023878.

Principally a variety of coatings may be applied, for example, those listed below:
a) Crosslinked polymers derived from aldehydes on the one hand and phenols, ureas and melamines on the other hand, such as phenol/formaldehyde resins, urea/formaldehyde resins and melamine/formaldehyde resins.
b) Drying and non-drying alkyd resins.
c) Unsaturated polyester resins derived from copolyesters of saturated and unsaturated dicarboxylic acids with polyhydric alcohols and vinyl compounds as crosslinking agents, and also halogen-containing modifications thereof of low flammability.
d) Crosslinkable acrylic resins derived from substituted acrylates, for example epoxy acrylates, urethane acrylates or polyester acrylates.
e) Alkyd resins, polyester resins and acrylate resins crosslinked with melamine resins, urea resins, isocyanates, isocyanurates, polyisocyanates or epoxy resins.
f) Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.

In principal the coating is solvent based or water based and contains a binder, which is selected from the group consisting of alkyd resins, modified alkyd resins, alkyd urethane resins, alkyd silicone resins, autocrosslinking or non-autocrosslinking acrylic resins, polyester resins, drying oils, phenolic resins and nitrocellulose or mixtures thereof.

Typical examples of organic solvents, which may suitably be used for the coating compositions are aliphatic, aromatic or cycloaliphatic hydrocarbons, alcohols, esters, ketones or chlorinated hydrocarbons.

Water/solvent mixtures are typically mixtures of water and lower alcohols, glycols or glycol ethers.

The coating may also be a radiation-curable, solvent-free formulation of photopolymerisable compounds. Illustrative examples are mixtures of acrylates or methacrylates, unsaturated polyester/styrene mixtures or mixtures of other ethylenically unsaturated monomers or oligomers.

Preferably the coating is water based and contains an acrylic or methacrylic resin.

For example the amount of organic UV-absorber is from 0.5% to 5%, in particular from 0.5% to 3% by weight based on the weight of the total binder formulation.

For instance the amount of inorganic UV-absorber is from 0.002% to 0.5%, in particular from 0.01 to 0.3% by weight based on the weight of the total binder formulation.

The coating can be applied to the cork or wood substrate by conventional techniques, for example by spreading, brushing, dipping, deluging or spraying.

The coating may contain an additional stabilizer selected from the group consisting of a sterically hindered amine light stabilizer, a phosphite or phosphonite and sterically hindered phenolic antioxidant or mixtures thereof. Examples are given below

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Tocopherols, for example α-tocopherol, β-tocopherol, γ-tocopherol, δ-tocopherol and mixtures thereof (vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis(4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis(6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.
2.1. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)-oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)-amino)-s-triazine.
3. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

### The following phosphites are especially preferred:

Tris(2,4-di-tert-butylphenyl) phosphite (Irgafos^{®}168, Ciba Specialty Chemicals Inc.), tris(nonylphenyl) phosphite,

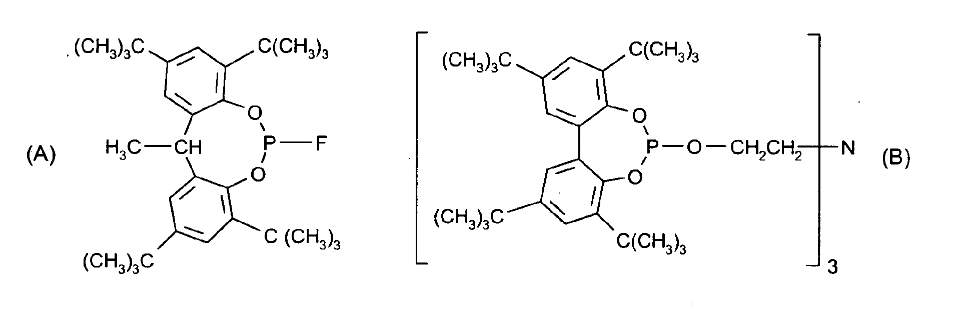

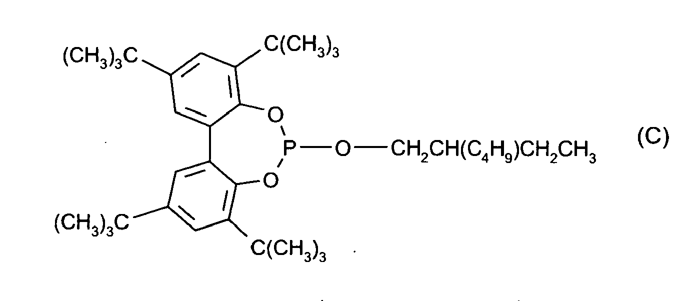

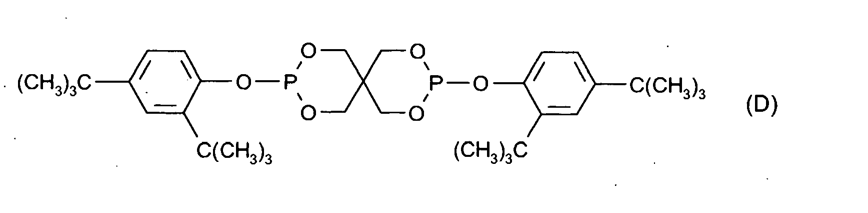

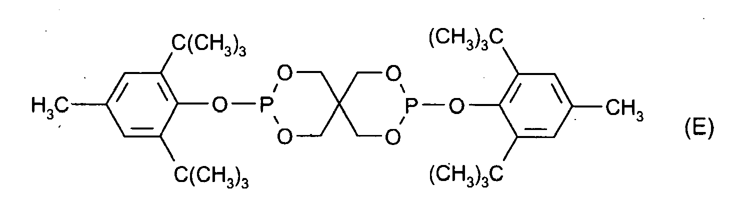

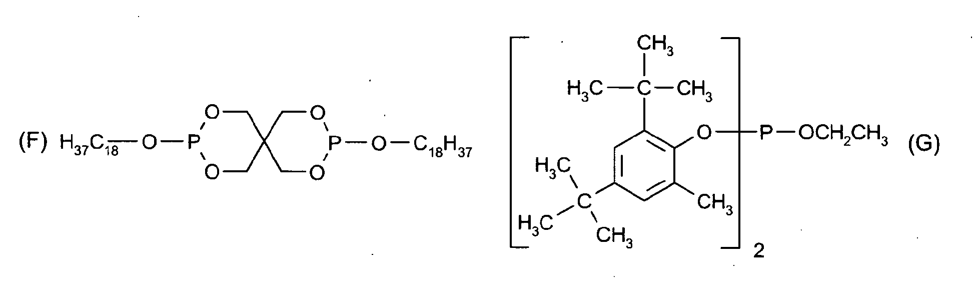

In a specific embodiment of the invention the cork or wood substrate has been pretreated with an aqueous and/or organic solution of
a) bis(1-oxyl-2,2-6-6-tetramethylpiperidin-4-yl) sebacate;
b) bis(1-hydroxy-2,2-6-6-tetramethylpiperidin-4-yl) sebacate;
c) 1-hydroxy-2,2-6-6-tetramethyl-4-acetoxypiperidinium citrate;
d) 1-oxyl-2,2,6,6-tetramethyl-4-acetamidopiperidine;
e) 1-hydroxy-2,2,6,6-tetramethyl-4-acetamidopiperidine;
f) 1-hydroxy-2,2,6,6-tetramethyl-4-acetamidopiperidinium bisulfate;
g) 1-oxyl-2,2,6,6-tetramethyl-4-oxo-piperidine;
h) 1-hydroxy -2,2,6,6-tetramethyl-4-oxo-piperidine;
i) 1-hydroxy -2,2,6,6-tetramethyl-4-oxo-piperidinium acetate;
j) 1-oxyl-2,2,6,6-tetramethyl-4-methoxy-piperidine;
k) 1-hydroxy-2,2,6,6-tetramethyl-4-methoxy-piperidine;
l) 1-hydroxyl-2,2,6,6-tetramethyl-4-methoxy-piperidinium acetate;
m) 1-oxyl-2,2,6,6-tetramethyl-4-acetoxypiperidine;
n) 1-hydroxy-2,2,6,6-tetramethyl-4-acetoxypiperidine;
o) 1-oxyl-2,2,6,6-tetramethyl-4-propoxy-piperidine;
p) 1-hydroxy-2,2,6,6-tetramethyl-4-propoxy-piperidinium acetate;
q) 1-hydroxy-2,2,6,6-tetramethyl-4-propoxy-piperidine;
r) 1-oxyl-2,2,6,6-tetramethyl-4-(2-hydroxy-4-oxapentoxy)piperidine;
s) 1-hydroxy-2,2,6,6-tetramethyl-4-(2-hydroxy-4-oxapentoxy)piperidinium acetate;
t) 1-oxyl-2,2,6,6-tetramethyl-4-hydroxypiperidine;
u) 1-hydroxy-2,2,6,6-tetramethyl-4-hydroxypiperidine;
v) 1-hydroxy-2,2,6,6-tetramethyl-4-hydroxypiperidinium chloride;
w) 1-hydroxy-2,2,6,6-tetramethyl-4-hydroxypiperidinium acetate;
x) 1-hydroxy-2,2,6,6-tetramethyl-4-hydroxypiperidinium bisulfate;
y) 1-hydroxy-2,2,6,6-tetramethyl-4-hydroxypiperidinium citrate;
z) bis(1-hydroxy-2,2,6,6-tetramethyl-4-hydroxypiperidinium) citrate;
aa)tris(1-hydroxy-2,2,6,6-tetramethyl-4-hydroxypiperidinium) citrate.
bb) tetra(1-hydroxy-2,2,6,6-tetramethyl-4-hydroxypiperidinium) ethylenediaminetetraacetate;
(cc) tetra(1-hydroxy-2,2,6,6-tetramethyl-4-acetamidopiperidinium) ethylenediaminetetraacetate;
(dd) tetra(1-hydroxy-2,2,6,6-tetramethyl-4-oxopiperidinium) ethylenediaminetetraacetate;
(ee) penta(1-hydroxy-2,2,6,6-tetramethyl-4-hydroxypiperidinium) diethylenetriaminepentaacetate;
(ff) penta(1-hydroxy-2,2,6,6-tetramethyl-4-acetamidopiperidinium) diethylenetriaminepentaacetate;
(gg) penta(1-hydroxy-2,2,6,6-tetramethyl-4-oxopiperidinium) diethylenetriaminepentaacetate;
(hh) tri(1-hydroxy-2,2,6,6-tetramethyl-4-hydroxypiperidinium) nitrilotriacetate;
(ii) tri(1-hydroxy-2,2,6,6-tetramethyl-4-acetamidopiperidinium) nitrilotriacetate;
(jj) tri(1-hydroxy-2,2,6,6-tetramethyl-4-oxopiperidinium) nitrilotriacetate;
(kk) penta(1-hydroxy-2,2,6,6-tetramethyl-4-hydroxypiperidinium) diethylenetriamine-pentamethylenephosphonate;
(ll) penta(1-hydroxy-2,2,6,6-tetramethyl-4-acetamidopiperidinium) diethylenetriamine-pentamethylenephosphonate;
(mm) penta(1-hydroxy-2,2,6,6-tetramethyl-4-oxopiperidinium) diethylenetriamine-pentamethylenephosphonate or mixtures thereof.

The pretreatment can be applied to the wood by conventional techniques, for example by impregnating, spreading, brushing, dipping, deluging or spraying. Also impregnating under high pressure or under vacuum is possible.

Such a pretreatment of wood has been described in WO 2005/005114.

In a preferred embodiment the cork or wood substrate has been pretreated with an aqueous and/or organic solution of 1-oxyl-2,2,6,6-tetramethyl-4-hydroxypiperidine.

The hindered amine compounds are known and partially commercially available, such as Lignostab® 1198 from Ciba Specialty Chemicals Inc. or may be produced by chemical standard methods. Examples are given in J. Polym Sci. Polym. Chem. Ed., 22, 277-281 (1984) and in US 4,831 134. The salts are readiliy prepared from the corresponding amine precursor and a suitable acid.

The intermediates needed to make the instant compounds are largely items of commerce.

For example the hindered amine compound is applied in an amount of 0.1-10 %, preferably from 0.1-5% and more preferably from 0.2-2% by weight based on the weight of the stain or impregantion.

A further aspect of the invention is the use of a combination of an organic UV-absorber selected from the group consisting of the hydroxybenzophenone, hydroxyphenylbenzotriazole, oxanilide and hydroxyphenyltriazine UV-absorbers or mixtures thereof; and an inorganic UV-absorber selected from the group consisting of transparent iron oxide, transparent titanium dioxide, transparent zinc oxide, transparent cerium oxide and carbon black or mixtures thereof;
in a weight ratio of organic UV-absorber to inorganic UV-absorber from 1000:1 to 10:1 for protecting cork or wood substrates from discoloration wherein the wood substrate is selected from the group consisting of beech, alder, meranti, oak, cherry, teak, nut redwood, mahogany, eucalyptus, american beech, durian, red cedar, leichhardt tree, champa, rubberwood, taiwan ash, campher tree, zebra wood, makha, rosewood, rain tree and ironwood.

Preferences and definitions have already been given. They apply also for the other aspect of the invention.

The following examples illustrate the invention.

### Example 1: Light stabilization of cork

The additives and pigments given in table 1 are added to the waterborne acrylic dispersion (see formulation table 2). The pigments are added pre-dispersed and used as concentrates (see table 3). The paint is applied on the cork panel by brush in two layers (approximately 100-110g/m² per brush) with a drying time of one day between each layer. The color difference (DE*) is measured according to DIN 6174 before and after 100 hours exposure to Xenon lamp light according DIN EN ISO 11341 C as given below:

| | |
|---|---|
| Machine type: | Atlas Weather-O-meter Ci-65 A (two-tier rack) |
| Light Source: | 6.5 kW Xenon burner water-cooled |
| Filter combination: | Outer filter "Sodalime" (Window glass) / Inner filter Boro S |
| Procedure: | C |
| Cycle Conditions: | |
| | Permanent light |
| 0.35 W/m² @ 340 nm | Irradiance, controlled |
| (50±2) °C | Black panel temperature |
| (50±5) % | Rel. humidity at the end of the dry period |

**Table 1: UV-Absorber Combinations and Corresponding Color Differences after Exposure**

| **% Pigment ^{1,3}** | **% Additive ^{2,3}** | **DE* (100h)** |
|---|---|---|
| - | - | 12.1 |
| - | 10% TINUVtN® 477DW | 7.3 |
| 0.02% Sicotrans® Yellow L1916 + | | |
| 0.02% Sicotrans® Red L2815 + | - | 7.5 |
| 0.005% Carbon Black FW200 | | |
| 0.02% Sicotrans® Yellow L1916 + | | |
| 0.02% Sicotrans® Red L2815 + | 9.78% TINUVIN®477DW⁴ | 4.3 |
| 0.005% Carbon Black FW200 | | |
| 0.05% Sicotrans® Yellow L1916 + | | |
| 0.05% Sicotrans® Red L2815 + | - | 6.6 |
| 0.005% Carbon Black FW200 | | |
| 0.05% Sicotrans® Yellow L1916 + | | |
| 0.05% Sicotrans® Red L2815 + | 9.48% TINUVIN®477DW⁴ | 4.3 |
| 0.005% Carbon Black FW200 | | |

| | | |
|---|---|---|
| 1) Sicotrans® Yellow L1916 and Sicotrans® Red L 2815 are transparent iron oxides from BASF; FW 200 is a carbon black from Degussa 2) TINUVIN® 477 DW is a UV-Absorber (20% active UVA) from Ciba Specialty Chemicals Inc. 3) Based on total paint 4) Amount of inorganic and organic UVA corresponds to 2% active UVA | | |

**Table 2: Used Acrylic Dispersion**

| | | | |
|---|---|---|---|
| Joncryl® 8383 | Binder | (1) | 85.0 |
| EFKA® 3580 | Wetting agent | (2) | 0.5 |
| EFKA® 2550 | Defoamer | (2) | 0.4 |
| Water | Solvent | | 1.5 |
| Dowanol® PnP | Coalescent | (3) | 7.5 |
| GLASWAX® E1 | Wax | (2) | 3.6 |
| RHEOVIS® PU20 | Thickener | (2) | 1.5 |
| | | | 100.0 |

| | | | |
|---|---|---|---|
| (1) Johnson Polymer B.V. (2) Ciba Specialty Chemicals Inc. (3) Dow Chemical Company | | | |

**Table 3: Transparent iron oxide (TIO) concentrates¹**

| | **Red L2815** | **Yellow L1916** | **FW200** |
|---|---|---|---|
| Acrylic dispersion | 49.8 | 49.8 | 49.8 |
| EFKA®-4550 ² | 10.0 | 10.0 | 10.0 |
| EFKA®-2550 ² | 0.2 | 0.2 | 0.2 |
| Water | 35.0 | 35.0 | 37.5 |
| Pigment | 5.0 | 5.0 | 2.5 |
| | 100.0 | 100.0 | 100.0 |

| | | | |
|---|---|---|---|
| 1) TIO concentrates are made according to Table 3 in 250ml glass jars, 100g Zirconia beads (0 1mm), dispersed with Skandex Lau for 2h 2) EFKA 4550 and 2550 are from Ciba Specialty Chemicals | | | |

The above comparative experiments clearly show that the combination of a transparent iron oxide and an organic UV-absorber perform better than the single usage of a transparent iron oxide or the single usage of an organic UV-absorber, a synergistic effect is clearly achieved and almost no bleaching effect is visible.

### Example 2: Waterborne Acrylic on Alder

The additives given in Table 1 are added to the waterborne acrylic dispersion (see formulation table 2). The pigments are added pre-dispersed and used as concentrate (see table 3). The paint is applied on the wood panel by brush in two layers (approximately 110g/m² per brush) with a drying time of one day between each layer. The color difference (DE*) is measured according DIN 6174 before and after 100 hours exposure to Xenon lamp light according to DIN EN ISO 11341 C as given below:

| | |
|---|---|
| Machine type: | Atlas Weather-O-meter Ci-65 A (two-tier rack) |
| Light Source: | 6.5 kW Xenon burner water-cooled |
| Filter combination: | Outer filter "Sodalime" (Window glass) / Inner filter Boro S |
| Procedure: | C |
| Cycle Conditions: | |
| | Permanent light |
| 0.35 W/m² @ 340 nm | Irradiance, controlled |
| (50±2) °C | Black panel temperature |
| (50±5) % | Rel. humidity at the end of the dry period |

**Table 1: UV-Absorber Combinations and Corresponding Color Differences after Exposure**

| **% Pigment^{1,3}** | **% Additive ^{2,3}** | **DE* (100h)** |
|---|---|---|
| - | - | 11.5 |
| | 10% TINUVIN® 477DW + 1% | |
| - | TINUVIN® 5100 | 9.8 |
| 0.03% Sicotrans® Yellow L1916 + | | |
| 0.03% Sicotrans® Red L2815 + | - | 9.6 |
| 0.003% Carbon Black FW200 | | |
| 0.03% Sicotrans® Yellow L1916 + 0.03% Sicotrans® Yellow L1916 + | 9.69% TINUVIN®477DW⁴ + | |
| 0.03% Sicotrans® Red L2815 + | 1% TINUVIN® 5100⁵ | 4.7 |
| 0.003% Carbon Black FW200 | | |
| 0.05% Sicotrans® Yellow L1916 + | | |
| 0.05% Sicotrans® Red L2815 + | - | 8.6 |
| 0.003% Carbon Black FW200 | | |
| 0.05% Sicotrans® Yellow L1916 + 0.05% Sicotrans® Yellow L1916 + | 9.49% TINUVIN®477DW⁴ + | |
| 0.05% Sicotrans® Red L2815 + | 1% TINUVIN® 5100 | 3.8 |
| 0.003% Carbon Black FW200 | | |

| | | |
|---|---|---|
| 1) Sicotrans® Yellow L1916 and Sicotrans® Red L 2815 are transparent iron oxides from BASF 2) TINUVIN® 477 DW is a UV-Absorber (20% active UVA) from Ciba Specialty Chemicals Inc. 3) Based on total paint 4) Amount of inorganic and organic UVA corresponds to 2% active UVA 5 TINUVIN 5100 is a sterically hindered amine light stabilizer from Ciba Specialty Chemicals Inc. | | |

**Table 2: Used Acrylic Dispersion**

| | | | |
|---|---|---|---|
| Joncryl® 8383 | Binder | (1) | 85.0 |
| EFKA® 3580 | Wetting agent | (2) | 0.5 |
| EFKA® 2550 | Defoamer | (2) | 0.4 |
| Water | Solvent | | 1.5 |
| Dowanol® PnP | Coalescent | (3) | 7.5 |
| GLASWAX® E1 | Wax | (2) | 3.6 |
| RHEOVIS® PU20 | Thickener | (2) | 1.5 |
| | | | 100.0 |

| | | | |
|---|---|---|---|
| (1) Johnson Polymer B.V. (2) Ciba Specialty Chemicals Inc. (3) Dow Chemical Company | | | |

**Table 3: Transparent iron oxide (TIO) concentrates ¹**

| | **Red L2815** | **Yellow L1916** | **FW200** |
|---|---|---|---|
| Acrylic dispersion | 49.8 | 49.8 | 49.8 |
| EFKA®-4550 ² | 10.0 | 10.0 | 10.0 |
| EFKA®-2550 ² | 0.2 | 0.2 | 0.2 |
| Water | 35.0 | 35.0 | 37.5 |
| Pigment | 5.0 | 5.0 | 2.5 |
| | 100.0 | 100.0 | 100.0 |

| | | | |
|---|---|---|---|
| 1) TIO concentrates are made according table 3 in 250ml glass jars, 100g Zirconia beads (Ø 1 mm), dispersed with Skandex Lau for 2h 2) EFKA 4550 and 2550 are from Ciba Specialty Chemicals Inc. | | | |

The above comparative experiments clearly show that the combination of a transparent iron oxide and an organic UV-absorber perform better than the single usage of a transparent iron oxide or the single usage of an organic UV-absorber, a synergistic effect is clearly achieved and almost no bleaching effect is visible.

### Example 3: Solventborne Alkyd on Exotic Wood

The additives given in Table 1 are added to the solventborne alkyd paint (see formulation table 2). The pigment preparations are added in delivery form (see table 3). The paint is applied on the wood panel by brush in two layers (approximately 100 g/m² per brush) with a drying time of one day between each layer. The color difference (DE^{*}) is measured according DIN 6174 before and after 1000 hours exposure to Xenon lamp light according to DIN EN ISO 11341 C as given below:

| | | |
|---|---|---|
| Machine type: | Atlas Weather-O-meter Ci-65 A (two-tier rack) | |
| Light source: | 6.5kW Xenon burner water-cooled | |
| Filter combination: | Outer filter Boro S / Inner filter Boro S | |
| Procedure: | A | |
| Cycle conditions: | | |
| 102 min | | Light |
| | 0.35 W/m² @ 340 nm | Irradiance, controlled |
| | (60±2) °C | Black panel temperature |
| | (50±5) % | Rel. humidity at the end of the dry period |
| 18 min | | Light and Spray |
| | 0.35 W/m² @ 340 nm | Irradiance, controlled |
| | (35±2) °C | Black panel temperature |
| | (95±5) % | Rel. humidity |

**Table 1: UV-Absorber Combinations and Corresponding Color Differences after Exposure**

| **Wood** | **TIO^{1,2}** | **% Additive ^{2,3}** | **DE* (1000 h)** |
|---|---|---|---|
| Teak | - | - | 8.79 |
| | - | 1.0% TINUVIN® 5060 | 5.36 |
| | 0.78% Mix A | - | 5.13 |
| | 0.78% Mix A | 1.0% TINUVIN® 5060 | 3.85 |
| Ironwood | - | - | 18.62 |
| | - | 1.0% TINUVIN® 5060 | 13.42 |
| | 0.78% Mix A | - | 14.32 |
| | 0.78% Mix A | 1.0% TINUVIN® 5060 | 10.24 |
| Leichhardt tree | - | - | 20.91 |
| | - | 1.0% TINUVIN® 5060 | 14.98 |
| | 0.70% Mix B | - | 13.98 |
| | 0.70% Mix B | 1.0% TINUVIN® 5060 | 10.44 |
| Champa | - | - | 21.35 |
| | - | 1.0% TINUVIN® 5060 | 20.83 |
| | 0.70% Mix B | - | 21.84 |
| | 0.70% Mix B | 1.0% TINUVIN® 5060 | 16.85 |
| Red Cedar | - | - | 11.23 |
| | - | 1.0% TINUVIN® 5060 | 12.24 |
| | 3.15% Mix. C | - | 13.54 |
| | 3.15% Mix C | 1.0% TINUVIN® 5060 | 10.00 |

| | | | |
|---|---|---|---|
| 1) Mix A, B and C are compositions as snown in table 3, based on SICOFLASH® pigment preparations from BASF 2) TINUVIN® 5060 is a blend of the UV-Absorber TINUVIN® 99-2 and the HALS TINUVIN® 123 (1: 1) from Ciba Specialty Chemicals Inc. 3) Based on total paint | | | |

**Table 2: Used Alkyd Dispersion**

| | | | |
|---|---|---|---|
| ALKYDAL® F 681 | Binder | (1) | 70.00 |
| EFKA® 6220 | Wetting agent | (2) | 2.60 |
| EFKA® 3236 | Slip Agent | (2) | 1.00 |
| OCTA-SOLIGEN® Calcium 10 | Dryer | (3) | 0.50 |
| OCTA-SOLIGEN® Zirconium 12 | Dryer | (3) | 0.50 |
| OCTA-SOLIGEN® 69 | Dryer | (3) | 0.30 |
| BORCHI® NOX M2 | Anti- Skinning | (3) | 0.30 |
| White Spirit | Solvent | | 24.80 |

| | | | |
|---|---|---|---|
| (1) Bayer Material Science (www.bayer.com) (2) Ciba Specialty Chemicals Inc. (www.ciba.com) (3) Borchers GmbH (www.borchers.com) | | | |

**Table 3: Transparent iron oxide (TIO) composition¹**

| | **Mix A** | **Mix B** | **Mix C** |
|---|---|---|---|
| SICOFLASH®¹ P Schwarz 0054 ² | 12% | 5% | 1 % |
| SICOFLUSH®¹ P Gelb 1916 ³ | 48% | 90% | 79% |
| SICOFLUSH®¹ P Rot 2817 ⁴ | 40% | 5% | 20% |

| | | | |
|---|---|---|---|
| 1) Pigmented preparation from BASF (www.basf.de); highly concentrated paste based on organic binders and solvents; can be stirred directly into the binder. Used in delivery form 2) SICOFLASH®¹ P Schwarz 0054: 20% TIO 3) SICOFLUSH®¹ P Gelb 1916: 35% TIO 4) SICOFLUSH®¹ P Rot 2817: 35% TIO | | | |

The above comparative experiments clearly show that the combination of a transparent iron oxide and an organic UV-absorber perform better than the single usage of a transparent iron oxide or the single usage of an organic UV-absorber, a synergistic effect is clearly achieved and the color deviation is significantly reduced.

## Claims

1. A method for protecting cork or wood substrates from discoloration
wherein the wood substrate is selected from the group consisting of beech, alder, meranti, oak, cherry, teak, nut redwood, mahogany eucalyptus, american beech, durian, red cedar, leichhardt tree, champa, rubberwood, taiwan ash, campher tree, zebra wood, makha, rosewood, rain tree and ironwood;
comprising applying to the cork or wood substrate a coating, which coating contains
a) an organic UV-absorber selected from the group consisting of the hydroxybenzophenone, hydroxyphenylbenzotriazole, oxanilide and hydroxyphenyltriazine UV-absorbers or mixtures thereof; and
b) an inorganic UV-absorber selected from the group consisting of transparent iron oxide, transparent titanium dioxide, transparent zinc oxide, transparent cerium oxide and carbon black or mixtures thereof; wherein
the weight ratio of organic UV-absorber to inorganic UV-absorber is from 1000:1 to 10:1.

2. A method according to claim 1 wherein the wood substrate is selected from the group consisting of beech, alder, meranti, oak, cherry, teak, nut redwood and mahogany.

3. A method according to claim 1 wherein the substrate is cork or alder.

4. A method according to claim 1 wherein the substrate is cork.

5. A method according to claim 1 wherein the inorganic UV-absorber is a transparent iron oxide or carbon black or a mixture thereof.

6. A method according to claim 1 wherein the hydroxybenzophenone is of formula I 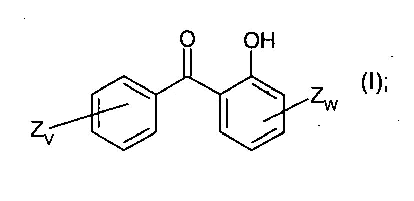 the 2-hydroxyphenylbenzotriazole is of formula IIa, IIb or IIc 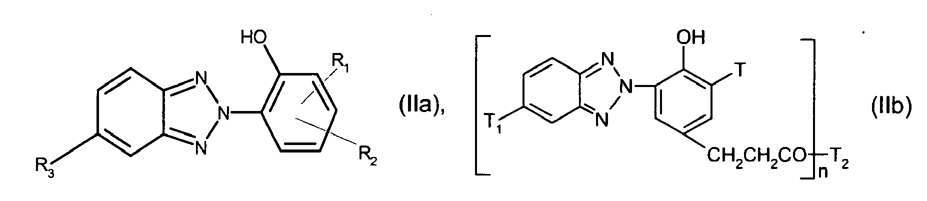 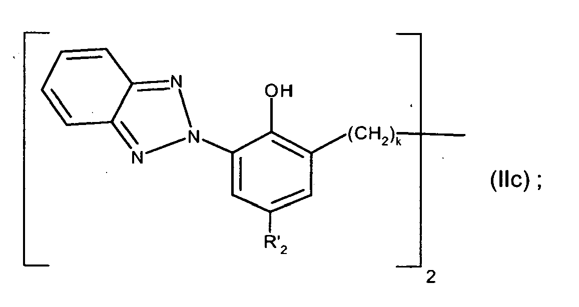 the 2-hydroxyphenyltriazine is of formula III 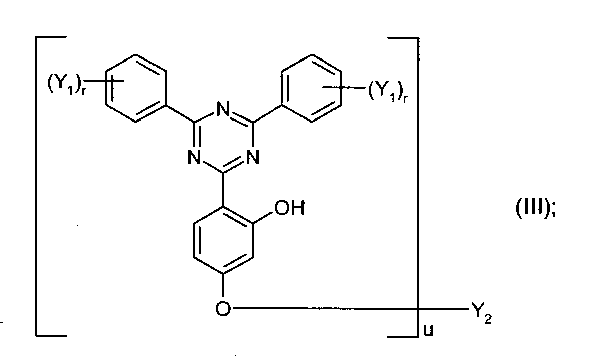 and the oxanilide is of formula (IV) 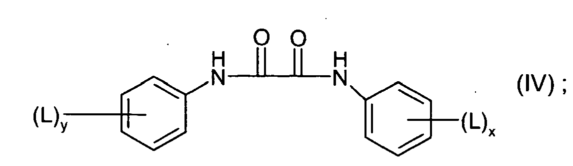 wherein
in the compounds of the formula (I) v is an integer from 1 to 3 and w is 1 or 2 and the substituents Z independently of one another are hydrogen, halogen, hydroxyl or alkoxy having 1 to 12 carbon atoms;
in the compounds of the formula (IIa),
R₁ is hydrogen, alkyl having 1 to 24 carbon atoms, phenylalkyl having 1 to 4 carbon atoms in the alkyl moiety, cycloalkyl having 5 to 8 carbon atoms or a radical of the formula 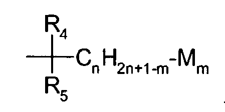 in which
R₄ and R₅ independently of one another are alkyl having in each case 1 to 5 carbon atoms, or R₄, together with the radical CₙH₂ₙ₊₋ₘ, forms a cycloalkyl radical having 5 to 12 carbon atoms,
m is 1 or 2, n is an integer from 2 to 20 and
M is a radical of the formula -COOR₆ in which
R₆ is hydrogen, alkyl having 1 to 12 carbon atoms, alkoxyalkyl having in each case 1 to 20 carbon atoms in the alkyl moiety and in the alkoxy moiety or phenylalkyl having 1 to 4 carbon atoms in the alkyl moiety,
R₂ is hydrogen, halogen, alkyl having 1 to 18 carbon atoms, and phenylalkyl having 1 to 4 carbon atoms in the alkyl moiety, and
R₃ is hydrogen, chlorine, alkyl or alkoxy having in each case 1 to 4 carbon atoms or -COOR₆ in which R₆ is as defined above, at least one of the radicals R₁ and R₂ being other than hydrogen;
in the compounds of the formula (IIb)
T is hydrogen or alkyl having 1 to 6 carbon atoms,
T₁ is hydrogen, chlorine or alkyl or alkoxy having in each case 1 to 4 carbon atoms, n is 1 or 2 and,
if n is 1,
T₂ is chlorine or a radical of the formula -OT₃ or 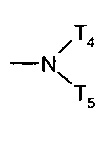 and,
if n is 2, T₂ is a radical of the formula 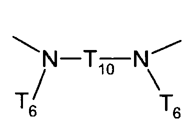 or -O-T₉-O-;
in which
T₃ is hydrogen, alkyl which has 1 to 18 carbon atoms and is unsubstituted or substituted by 1 to 3 hydroxyl groups or by -OCOT₆, alkyl which has 3 to 18 carbon atoms, is interrupted once or several times by -O- or -NT₆- and is unsubstituted or substituted by hydroxyl or -OCOT₆, cycloalkyl which has 5 to 12 carbon atoms and is unsubstituted or substituted by hydroxyl and/or alkyl having 1 to 4 carbon atoms, alkenyl which has 2 to 18 carbon atoms and is unsubstituted or substituted by hydroxyl, phenylalkyl having 1 to 4 carbon atoms in the alkyl moiety, or a radical of the formula -CH₂CH(OH)-T₇ or 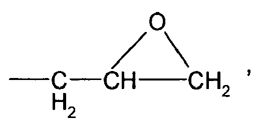 T₄ and T₅ independently of one another are hydrogen, alkyl having 1 to 18 carbon atoms, alkyl which has 3 to 18 carbon atoms and is interrupted once or several times by -O- or -NT₆-, cycloalkyl having 5 to 12 carbon atoms, phenyl, phenyl which is substituted by alkyl having 1 to 4 carbon atoms, alkenyl having 3 to 8 carbon atoms, phenylalkyl having 1 to 4 carbon atoms in the alkyl moiety or hydroxyalkyl having 2 to 4 carbon atoms,
T₆ is hydrogen, alkyl having 1 to 18 carbon atoms, cycloalkyl having 5 to 12 carbon atoms, alkenyl having 3 to 8 carbon atoms, phenyl, phenyl which is substituted by alkyl having 1 to 4 carbon atoms, phenylalkyl having 1 to 4 carbon atoms in the alkyl moiety,
T₇ is hydrogen, alkyl having 1 to 18 carbon atoms, phenyl which is unsubstituted or substituted by hydroxyl, phenylalkyl having 1 to 4 carbon atoms in the alkyl moiety, or - CH₂OT₈,
T₈ is alkyl having 1 to 18 carbon atoms, alkenyl having 3 to 8 carbon atoms, cycloalkyl having 5 to 10 carbon atoms, phenyl, phenyl which is substituted by alkyl having 1 to 4 carbon atoms, or phenylalkyl having 1 to 4 carbon atoms in the alkyl moiety,
T₉ is alkylene having 2 to 8 carbon atoms, alkenylene having 4 to 8 carbon atoms, alkynylene having 4 carbon atoms, cyclohexylene, alkylene which has 2 to 8 carbon atoms and is interrupted once or several times by -O-, or a radical of the formula - CH₂CH(OH)CH₂OT₁₁OCH₂CH(OH)CH₂- or -CH₂-C(CH₂OH)₂-CH₂-,
T₁₀ is alkylene which has 2 to 20 carbon atoms and can be interrupted once or several times by -O-, or cyclohexylene,
T₁₁ is alkylene having 2 to 8 carbon atoms, alkylene which has 2 to 18 carbon atoms and is interrupted once or several times by -O-, 1,3-cyclohexylene, 1,4-cyclohexylene, 1,3-phenylene or 1,4-phenylene, or
T₁₀ and T₆, together with the two nitrogen atoms, are a piperazine ring;
in the compounds of formula (IIc)
R'₂ is C₁-C₁₂alkyl and k is a number from 1 to 4;
in the compounds of the formula (III)
u is 1 or 2 and r is an integer from 1 to 3, the substituents
Y₁ independently of one another are hydrogen, hydroxyl, phenyl or halogen, halogenomethyl, alkyl having 1 to 12 carbon atoms, alkoxy having 1 to 18 carbon atoms, alkoxy having 1 to 18 carbon atoms which is substituted by a group -COO(C₁-C₁₈alkyl);
if u is 1,
Y₂ is alkyl having 1 to 18 carbon atoms, phenyl which is unsubstituted or substituted by hydroxyl, halogen, alkyl or alkoxy having 1 to 18 carbon atoms;
alkyl which has 1 to 12 carbon atoms and is substituted by -COOH, -COOY₈, -CONH₂, - CONHY₉, -CONY₉Y₁₀, -NH₂, -NHY₉, -NY₉Y₁₀, -NHCOY₁₁, -CN and/or -OCOY₁₁;
alkyl which has 4 to 20 carbon atoms, is interrupted by one or more oxygen atoms and is unsubstituted or substituted by hydroxyl or alkoxy having 1 to 12 carbon atoms, alkenyl having 3 to 6 carbon atoms, glycidyl, cyclohexyl which is unsubstituted or substituted by hydroxyl, alkyl having 1 to 4 carbon atoms and/or -OCOY₁₁, phenylalkyl which has 1 to 5 carbon atoms in the alkyl moiety and is unsubstituted or substituted by hydroxyl, chlorine and/or methyl, -COY₁₂ or -SO₂Y₁₃, or,
if u is 2,
Y₂ is alkylene having 2 to 16 carbon atoms, alkenylene having 4 to 12 carbon atoms, xylylene, alkylene which has 3 to 20 carbon atoms, is interrupted by one or more -O- atoms and/or is substituted by hydroxyl, -CH₂CH(OH)CH₂-O-Y₁₅-OCH₂CH(OH)CH₂, -CO-Y₁₆-CO-, - CO-NH-Y₁₇-NH-CO- or -(CH₂)ₘ-CO₂-Y₁₈-OCO-(CH₂)ₘ, in which
m is 1, 2 or 3,
Y₈ is alkyl having 1 to 18 carbon atoms, alkenyl having 3 to 18 carbon atoms, alkyl which has 3 to 20 carbon atoms, is interrupted by one or more oxygen or sulfur atoms or -NT₆- and/or is substituted by hydroxyl, alkyl which has 1 to 4 carbon atoms and is substituted by - P(O)(OY₁₄)₂, -NY₉Y₁₀ or -OCOY₁₁ and/or hydroxyl, alkenyl having 3 to 18 carbon atoms, glycidyl, or phenylalkyl having 1 to 5 carbon atoms in the alkyl moiety,
Y₉ and Y₁₀ independently of one another are alkyl having 1 to 12 carbon atoms, alkoxyalkyl having 3 to 12 carbon atoms, dialkylaminoalkyl having 4 to 16 carbon atoms or cyclohexyl having 5 to 12 carbon atoms, or Y₉ and Y₁₀ together are alkylene, oxaalkylene or azaalkylene having in each case 3 to 9 carbon atoms,
Y₁₁ is alkyl having 1 to 18 carbon atoms, alkenyl having 2 to 18 carbon atoms or phenyl,
Y₁₂ is alkyl having 1 to 18 carbon atoms, alkenyl having 2 to 18 carbon atoms, phenyl, alkoxy having 1 to 12 carbon atoms, phenoxy, alkylamino having 1 to 12 carbon atoms or phenylamino,
Y₁₃ is alkyl having 1 to 18 carbon atoms, phenyl or alkylphenyl having 1 to 8 carbon atoms in the alkyl radical,
Y₁₄ is alkyl having 1 to 12 carbon atoms or phenyl,
Y₁₅ is alkylene having 2 to 10 carbon atoms, phenylene or a group -phenylene-M-phenylene- in which M is -O-, -S-, -SO₂-, -CH₂- or -C(CH₃)₂-,
Y₁₆ is alkylene, oxaalkylene or thiaalkylene having in each case 2 to 10 carbon atoms, phenylene or alkenylene having 2 to 6 carbon atoms,
Y₁₇ is alkylene having 2 to 10 carbon atoms, phenylene or alkylphenylene having 1 to 11 carbon atoms in the alkyl moiety, and
Y₁₈ is alkylene having 2 to 10 carbon atoms or alkylene which has 4 to 20 carbon atoms and is interrupted once or several times by oxygen;
in the compounds of the formula (IV) x is an integer from 1 to 3 and the substituents L independently of one another are hydrogen, alkyl, alkoxy or alkylthio having in each case 1 to 22 carbon atoms, phenoxy or phenylthio.

7. A method according to claim 1 wherein the coating is solvent based or water based and contains a binder, which is selected from the group consisting of alkyd resins, modified alkyd resins, alkyd urethane resins, alkyd silicone resins, autocrosslinking or non-autocrosslinking acrylic resins, polyester resins, drying oils, phenolic resins and nitrocellulose or mixtures thereof.

8. A method according to claim 7 wherein the coating is water based and contains an acrylic or methacrylic resin.

9. A method according to claim 1 wherein the amount of organic UV-absorber is from 0.5% to 5% by weight based on the weight of the total binder formulation.

10. A method according to claim 1 wherein the amount of inorganic UV-absorber is from 0.002% to 0.5% by weight based on the weight of the total binder formulation.

11. A method according to claim 1 wherein the coating an additional stabilizer selected from the group consisting of a sterically hindered amine light stabilizer, a phosphite or phosphonite and sterically hindered phenolic antioxidant or mixtures thereof.

12. A method according to claim 1 wherein the cork or wood substrate has been pretreated with an aqueous and/or organic solution of
bb) bis(1-oxyl-2,2-6-6-tetramethylpiperidin-4-yl) sebacate;
cc) bis(1-hydroxy-2,2-6-6-tetramethylpiperidin-4-yl) sebacate;
dd) 1-hydroxy-2,2-6-6-tetramethyl-4-acetoxypiperidinium citrate;
ee) 1-oxyl-2,2,6,6-tetramethyl-4-acetamidopiperidine;
ff) 1-hydroxy-2,2,6,6-tetramethyl-4-acetamidopiperidine;
gg) 1-hydroxy-2,2,6,6-tetramethyl-4-acetamidopiperidinium bisulfate;
hh) 1-oxyl-2,2,6,6-tetramethyl-4-oxo-piperidine;
ii) 1-hydroxy -2,2,6,6-tetramethyl-4-oxo-piperidine;
jj) 1-hydroxy -2,2,6,6-tetramethyl-4-oxo-piperidinium acetate;
kk) 1-oxyl-2,2,6,6-tetramethyl-4-methoxy-piperidine;
ll) 1-hydroxy-2,2,6,6-tetramethyl-4-methoxy-piperidine;
mm) 1-hydroxyl-2,2,6,6-tetramethyl-4-methoxy-piperidinium acetate;
nn) 1-oxyl-2,2,6,6-tetramethyl-4-acetoxypiperidine;
oo) 1-hydroxy-2,2,6,6-tetramethyl-4-acetoxypiperidine;
pp) 1-oxyl-2,2,6,6-tetramethyl-4-propoxy-piperidine;
qq) 1-hydroxy-2,2,6,6-tetramethyl-4-propoxy-piperidinium acetate;
rr) 1-hydroxy-2,2,6,6-tetramethyl-4-propoxy-piperidine;
ss) 1-oxyl-2,2,6,6-tetramethyl-4-(2-hydroxy-4-oxapentoxy)piperidine;
tt) 1-hydroxy-2,2,6,6-tetramethyl-4-(2-hydroxy-4-oxapentoxy)piperidinium acetate;
uu) 1-oxyl-2,2,6,6-tetramethyl-4-hydroxypiperidine;
w) 1-hydroxy-2,2,6,6-tetramethyl-4-hydroxypiperidine;
ww)1-hydroxy-2,2,6,6-tetramethyl-4-hydroxypiperidinium chloride;
xx) 1-hydroxy-2,2,6,6-tetramethyl-4-hydroxypiperidinium acetate;
yy) 1-hydroxy-2,2,6,6-tetramethyl-4-hydroxypiperidinium bisulfate;
zz) 1-hydroxy-2,2,6,6-tetramethyl-4-hydroxypiperidinium citrate;
aaa) bis(1-hydroxy-2,2,6,6-tetramethyl-4-hydroxypiperidinium) citrate;
bbb) tris(1-hydroxy-2,2,6,6-tetramethyl-4-hydroxypiperidinium) citrate.
bb) tetra(1-hydroxy-2,2,6,6-tetramethyl-4-hydroxypiperidinium) ethylenediaminetetraacetate;
(cc) tetra(1-hydroxy-2,2,6,6-tetramethyl-4-acetamidopiperidinium) ethylenediaminetetraacetate;
(dd) tetra(1-hydroxy-2,2,6,6-tetramethyl-4-oxopiperidinium) ethylenediaminetetraacetate;
(ee) penta(1-hydroxy-2,2,6,6-tetramethyl-4-hydroxypiperidinium) diethylenetriaminepentaacetate;
(ff) penta(1-hydroxy-2,2,6,6-tetramethyl-4-acetamidopiperidinium) diethylenetriaminepentaacetate;
(gg) penta(1-hydroxy-2,2,6,6-tetramethyl-4-oxopiperidinium) diethylenetriaminepentaacetate;
(hh) tri(1-hydroxy-2,2,6,6-tetramethy)-4-hydroxypiperidinium) nitrilotriacetate;
(ii) tri(1-hydroxy-2,2,6,6-tetramethyl-4-acetamidopiperidinium) nitrilotriacetate;
(jj) tri(1-hydroxy-2,2,6,6-tetramethy)-4-oxopiperidinium) nitrilotriacetate;
(kk) penta(1-hydroxy-2,2,6,6-tetramethyl-4-hydroxypiperidinium) diethylenetriamine-pentamethylenephosphonate;
(II) penta(1-hydroxy-2,2,6,6-tetramethyl-4-acetamidopiperidinium) diethylenetriamine-pentamethylenephosphonate;
(mm) penta(1-hydroxy-2,2,6,6-tetramethyl-4-oxopiperidinium) diethylenetriamine-pentamethylenephosphonate or mixtures thereof.

13. A method according to claim 12 wherein the cork or wood substrate has been pretreated with an aqueous and/or organic solution of 1-oxyl-2,2,6,6-tetramethyl-4-hydroxypiperidine.

14. Use of a combination of an organic UV-absorber selected from the group consisting of the hydroxybenzophenone, hydroxyphenylbenzotriazole, oxanilide and hydroxyphenyltriazine UV-absorbers or mixtures thereof; and an inorganic UV-absorber selected from the group consisting of transparent iron oxide, transparent titanium dioxide, transparent zinc oxide, transparent cerium oxide and carbon black or mixtures thereof;
in a weight ratio of organic UV-absorber to inorganic UV-absorber from 1000:1 to 10:1 for protecting cork or wood substrates from discoloration wherein the wood substrate is selected from the group consisting of beech, alder, meranti, oak, cherry, teak, nut redwood, mahogany, eucalyptus, american beech, durian, red cedar, leichhardt tree, champa, rubberwood, taiwan ash, campher tree, zebra wood, makha, rosewood, rain tree and ironwood.

## Patentansprüche

1. Verfahren zum Schützen von Kork- oder Holz-Substraten vor Verfärbung,
wobei das Holz-Substrat ausgewählt ist aus der Gruppe, bestehend aus Buche, Erle, Meranti, Eiche, Kirsche, Teak, Nuss, Rotholz, Mahagoni, Eukalyptus, Amerikanischer Buche, Durian, Roter Zeder, Leichhardt-Baum, Champa, Kautschuk-Baum-Holz, Taiwan-Esche, Campher-Baum, Zebra-Holz, Makamong-Baum, Rosen-Holz, Regen-Baum und Eisen-Holz;
umfassend Applizieren auf das Kork- oder Holz-Substrat einer Beschichtung, wobei die Beschichtung enthält
a) ein organisches UV-Absorptionsmittel, ausgewählt aus der Gruppe, bestehend aus den Hydroxybenzophenon-, Hydroxyphenylbenzotriazol-, Oxanilid- und Hydroxyphenyltriazin-UV-Absorptionsmitteln oder Gemischen davon; und
b) ein anorganisches UV-Absorptionsmittel, ausgewählt aus der Gruppe, bestehend aus transparentem Eisenoxid, transparentem Titandioxid, transparentem Zinkoxid, transparentem Ceroxid und Ruß oder Gemischen davon; worin
das Gewichtsverhältnis von organischem UV-Absorptionsmittel zu anorganischem UV-Absorptionsmittel von 1000 : 1 bis 10 : 1 ist.

2. Verfahren nach Anspruch 1, wobei das Holz-Substrat ausgewählt ist aus der Gruppe, bestehend aus Buche, Erle, Meranti, Eiche, Kirsche, Teak, Nuss, Rotholz und Mahagoni.

3. Verfahren nach Anspruch 1, wobei das Substrat Kork oder Erle ist.

4. Verfahren nach Anspruch 1, wobei das Substrat Kork ist.

5. Verfahren nach Anspruch 1, wobei das anorganische UV-Absorptionsmittel ein transparentes Eisenoxid oder Ruß oder ein Gemisch davon ist.

6. Verfahren nach Anspruch 1, wobei das Hydroxybenzophenon die Formel I aufweist 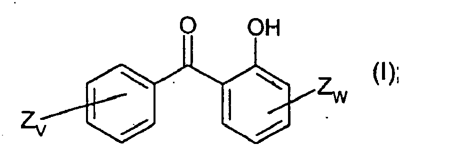 das 2-Hydroxyphenylbenzotriazol die Formel IIa, IIb oder IIc aufweist 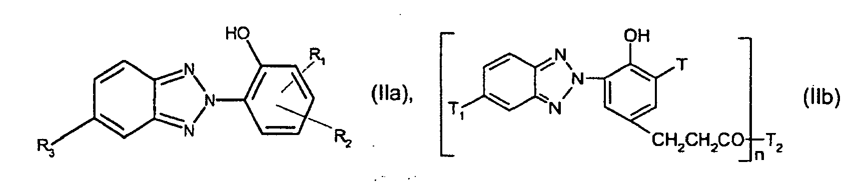 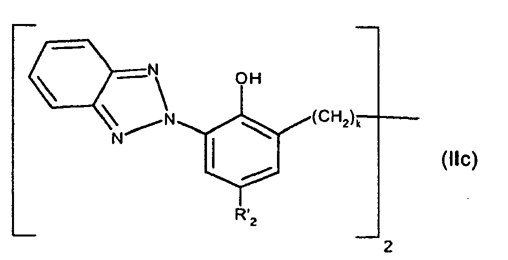 das 2-Hydroxyphenyltriazin die Formel III aufweist 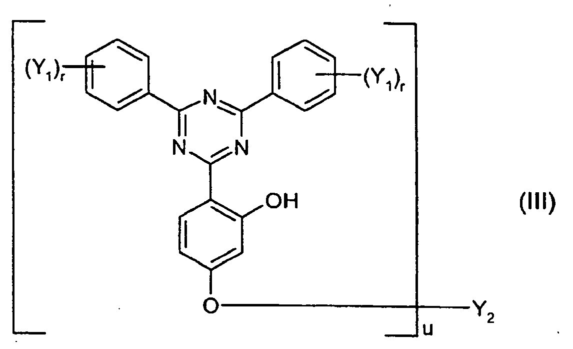 und das Oxanilid die Formel (IV) aufweist 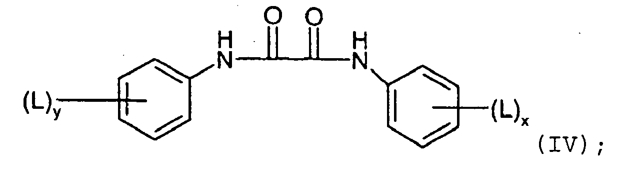 wobei
in den Verbindungen der Formel (I)
v eine ganze Zahl von 1 bis 3 ist und w 1 oder 2 ist und die Substituenten Z unabhängig voneinander Wasserstoff, Halogen, Hydroxyl oder Alkoxy mit 1 bis 12 Kohlenstoff-Atomen darstellen;
in den Verbindungen der Formel (IIa),
R₁ Wasserstoff, Alkyl mit 1 bis 24 Kohlenstoff-Atomen, Phenylalkyl mit 1 bis 4 Kohlenstoff-Atomen in der Alkyl-Einheit, Cycloalkyl mit 5 bis 8 Kohlenstoff-Atomen oder einen Rest der Formel 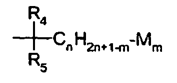 darstellt, worin R₄ und R₅ unabhängig voneinander Alkyl mit in jedem Fall 1 bis 5 Kohlenstoff-Atomen darstellen, oder R₄ zusammen mit dem Rest CₙH₂ₙ₊₁₋ₘ einen Cycloalkyl-Rest mit 5 bis 12 Kohlenstoff-Atomen bildet,
m 1 oder 2 ist, n eine ganze Zahl von 2 bis 20 ist und
M einen Rest der Formel -COOR₆ darstellt, worin
R₆ Wasserstoff, Alkyl mit 1 bis 12 Kohlenstoff-Atomen, Alkoxyalkyl mit in jedem Fall 1 bis 20 Kohlenstoff-Atomen in der Alkyl-Einheit und in der Alkoxy-Einheit oder Phenylalkyl mit 1 bis 4 Kohlenstoff-Atomen in der Alkyl-Einheit darstellt,
R₂ Wasserstoff, Halogen, Alkyl mit 1 bis 18 Kohlenstoff-Atomen, und Phenylalkyl mit 1 bis 4 Kohlenstoff-Atomen in der Alkyl-Einheit darstellt, und
R₃ Wasserstoff, Chlor, Alkyl oder Alkoxy mit in jedem Fall 1 bis 4 Kohlenstoff-Atomen oder -COOR₆ darstellt, worin R₆ wie vorstehend definiert ist, wobei mindestens einer der Reste R₁ und R₂ von Wasserstoff verschieden ist;
in den Verbindungen der Formel (IIb)
T Wasserstoff oder Alkyl mit 1 bis 6 Kohlenstoff-Atomen darstellt,
T₁ Wasserstoff, Chlor oder Alkyl oder Alkoxy mit in jedem Fall 1 bis 4 Kohlenstoff-Atomen darstellt,
n 1 oder 2 ist, und,
wenn n 1 ist,
T₂ Chlor oder einen Rest der Formel -OT₃ oder 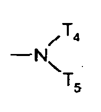 darstellt, und,
wenn n 2 ist, T₂ einen Rest der Formel 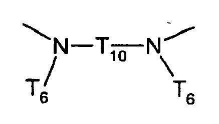 oder -O-T₉-O- darstellt;
worin
T₃ Wasserstoff, Alkyl, das 1 bis 18 Kohlenstoff-Atome aufweist, und unsubstituiert oder substituiert ist mit 1 bis 3 Hydroxyl-Gruppen oder mit -OCOT₆, Alkyl, das 3 bis 18 Kohlenstoff-Atome aufweist, ein- oder mehrere Male unterbrochen ist durch -O- oder -NT₆- und unsubstituiert oder substituiert ist mit Hydroxyl oder -OCOT₆, Cycloalkyl, das 5 bis 12 Kohlenstoff-Atome aufweist und unsubstituiert oder substituiert ist mit Hydroxyl und/oder Alkyl mit 1 bis 4 Kohlenstoff-Atomen, Alkenyl, das 2 bis 18 Kohlenstoff-Atome aufweist und unsubstituiert oder substituiert ist mit Hydroxyl, Phenylalkyl mit 1 bis 4 Kohlenstoff-Atomen in der Alkyl-Einheit, oder einen Rest der Formel -CH₂CH(OH)-T₇ oder 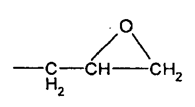 darstellt;
T₄ und T₅ unabhängig voneinander Wasserstoff, Alkyl mit 1 bis 18 Kohlenstoff-Atomen, Alkyl, das 3 bis 18 Kohlenstoff-Atome aufweist und ein- oder mehrere Male unterbrochen ist durch -O- oder -NT₆-, Cycloalkyl mit 5 bis 12 Kohlenstoff-Atomen, Phenyl, Phenyl, das substituiert ist mit Alkyl mit 1 bis 4 Kohlenstoff-Atomen, Alkenyl mit 3 bis 8 Kohlenstoff-Atomen, Phenylalkyl mit 1 bis 4 Kohlenstoff-Atomen in der Alkyl-Einheit oder Hydroxyalkyl mit 2 bis 4 Kohlenstoff-Atomen, darstellen;
T₆ Wasserstoff, Alkyl mit 1 bis 18 Kohlenstoff-Atomen, Cycloalkyl mit 5 bis 12 Kohlenstoff-Atomen, Alkenyl mit 3 bis 8 Kohlenstoff-Atomen, Phenyl, Phenyl, das substituiert ist mit Alkyl mit 1 bis 4 kohlenstoff-Atomen, Phenylalkyl mit 1 bis 4 Kohlenstoff-Atomen in der Alkyl-Einheit, darstellt;
T₇ Wasserstoff, Alkyl mit 1 bis 18 Kohlenstoff-Atomen, Phenyl, das unsubstituiert oder substituiert ist mit Hydroxyl, Phenylalkyl mit 1 bis 4 Kohlenstoff-Atomen in der Alkyl-Einheit, oder -CH₂OT₈ darstellt;
T₈ Alkyl mit 1 bis 18 Kohlenstoff-Atomen, Alkenyl mit 3 bis 8 Kohlenstoff-Atomen, Cycloalkyl mit 5 bis 10 Kohlenstoff-Atomen, Phenyl, Phenyl, das substituiert ist mit Alkyl mit 1 bis 4 Kohlenstoff-Atomen, oder Phenylalkyl mit 1 bis 4 Kohlenstoff-Atomen in der Alkyl-Einheit darstellt,
T₉ Alkylen mit 2 bis 8 Kohlenstoff-Atomen, Alkenylen mit 4 bis 8 Kohlenstoff-Atomen, Alkinylen mit 4 Kohlenstoff-Atomen, Cyclohexylen, Alkylen, das 2 bis 8 Kohlenstoff-Atome aufweist und ein- oder mehrere Male unterbrochen ist durch -O-, oder einen Rest der Formel -CH₂CH (OH) CH₂OT₁₁OCH₂CH (OH) CH₂- oder -CH₂-C(CH₂OH)₂-CH₂- darstellt,
T₁₀ Alkylen, das 2 bis 20 Kohlenstoff-Atome aufweist und ein- oder mehrere Male unterbrochen sein kann durch -O-, oder Cyclohexylen darstellt,
T₁₁ Alkylen mit 2 bis 8 Kohlenstoff-Atomen, Alkylen, das 2 bis 18 Kohlenstoff-Atome aufweist und ein- oder mehrere Male unterbrochen ist durch -O-, 1,3-Cyclohexylen, 1,4-Cyclohexylen, 1,3-Phenylen oder 1,4-Phenylen darstellt, oder
T₁₀ und T₆, zusammen mit den zwei Stickstoff-Atomen, einen Piperazin-Ring darstellen;
in den Verbindungen der Formel (IIc)
R'₂ C₁-C₁₂-Alkyl darstellt und k eine Zahl von 1 bis 4 ist;
in den Verbindungen der Formel (III)
u 1 oder 2 ist und r eine ganze Zahl von 1 bis 3 ist, die Substituenten
Y₁ unabhängig voneinander Wasserstoff, Hydroxyl, Phenyl oder Halogen, Halogenomethyl, Alkyl mit 1 bis 12 Kohlenstoff-Atomen, Alkoxy mit 1 bis 18 Kohlenstoff-Atomen, Alkoxy mit 1 bis 18 Kohlenstoff-Atomen, das substituiert ist mit einer Gruppe -COO(C₁-C₁₈-Alkyl), darstellen;
wenn u 1 ist,
Y₂ Alkyl mit 1 bis 18 Kohlenstoff-Atomen, Phenyl, das unsubstituiert oder substituiert ist mit Hydroxyl, Halogen, Alkyl oder Alkoxy mit 1 bis 18 Kohlenstoff-Atomen;
Alkyl, das 1 bis 12 Kohlenstoff-Atome aufweist und substituiert ist mit -COOH, -CO0Y₈, -CONH₂, -CONHY₉, -CONY₉Y₁₀, -NH₂, -NHY₉, -NY₉Y₁₀, -NHCOY₁₁, -CN und/oder -OCOY₁₁
Alkyl, das 4 bis 20 Kohlenstoff-Atome aufweist, durch ein oder mehrere Sauerstoff-Atome unterbrochen ist und unsubstituiert oder substituiert ist mit Hydroxyl oder Alkoxy mit 1 bis 12 Kohlenstoff-Atomen, Alkenyl mit 3 bis 6 Kohlenstoff-Atomen, Glycidyl, Cyclohexyl, das unsubstituiert oder substituiert ist mit Hydroxyl, Alkyl mit 1 bis 4 Kohlenstoff-Atomen und/oder -OCOY₁₁, Phenylalkyl, das 1 bis 5 Kohlenstoff-Atome in der Alkyl-Einheit aufweist und unsubstituiert oder substituiert ist mit Hydroxyl, Chlor und/oder Methyl, -COY₁₂ oder -SO₂Y₁₃, darstellt oder,
wenn u 2 ist,
Y₂ Alkylen mit 2 bis 16 Kohlenstoff-Atomen, Alkenylen mit 4 bis 12 Kohlenstoff-Atomen, Xylylen, Alkylen, das 3 bis 20 Kohlenstoff-Atome aufweist, durch ein oder mehrere Atome -O- unterbrochen ist und/oder substituiert ist mit Hydroxyl, -CH₂CH (OH) CH₂-O-Y₁₅-OCH₂CH (OH) CH₂, CO-Y₁₆-CO-, -CO-NH-Y₁₇-NH-CO- oder -(CH₂)ₘ-CO₂-Y₁₈-OCO-(CH₂)ₘ, darstellt, worin
m 1, 2 oder 3 ist,
Y₈ Alkyl mit 1 bis 18 Kohlenstoff-Atomen, Alkenyl mit 3 bis 18 Kohlenstoff-Atomen, Alkyl, das 3 bis 20 Kohlenstoff-Atome aufweist, durch ein oder mehrere Sauerstoff- oder Schwefel-Atome oder -NT₆- unterbrochen ist und/oder substituiert ist mit Hydroxyl, Alkyl, das 1 bis 4 Kohlenstoff-Atome aufweist und substituiert ist mit -P(O) (OY₁₄) ₂, -NY₉Y₁₀ oder -OCOY₁₁ und/oder Hydroxyl, Alkenyl mit 3 bis 18 Kohlenstoff-Atomen, Glycidyl, oder Phenylalkyl mit 1 bis 5 Kohlenstoff-Atomen in der Alkyl-Einheit darstellt,
Y₉ und Y₁₀ unabhängig voneinander Alkyl mit 1 bis 12 Kohlenstoff-Atomen, Alkoxyalkyl mit 3 bis 12 Kohlenstoff-Atomen, Dialkylaminoalkyl mit 4 bis 16 Kohlenstoff-Atomen oder Cyclohexyl mit 5 bis 12 Kohlenstoff-Atomen darstellen, oder Y₉ und Y₁₀ zusammen Alkylen, Oxaalkylen oder Azaalkylen mit in jedem Fall 3 bis 9 Kohlenstoff-Atomen darstellen,
Y₁₁ Alkyl mit 1 bis 18 Kohlenstoff-Atomen, Alkenyl mit 2 bis 18 Kohlenstoff-Atomen oder Phenyl darstellt,
Y₁₂ Alkyl mit 1 bis 18 Kohlenstoff-Atomen, Alkenyl mit 2 bis 18 Kohlenstoff-Atomen, Phenyl, Alkoxy mit 1 bis 12 Kohlenstoff-Atomen, Phenoxy, Alkylamino mit 1 bis 12 Kohlenstoff-Atomen oder Phenylamino darstellt,
Y₁₃ Alkyl mit 1 bis 18 Kohlenstoff-Atomen, Phenyl oder Alkylphenyl mit 1 bis 8 Kohlenstoff-Atomen in dem Alkyl-Rest darstellt,
Y₁₄ Alkyl mit 1 bis 12 Kohlenstoff-Atomen oder Phenyl darstellt,
Y₁₅ Alkylen mit 2 bis 10 Kohlenstoff-Atomen, Phenylen oder eine Gruppe -Phenylen-M-Phenylen- darstellt, worin M -O-, -S-, -SO₂-, -CH₂- oder -C(CH₃)₂- darstellt,
Y₁₆ Alkylen, Oxaalkylen oder Thiaalkylen mit in jedem Fall 2 bis 10 Kohlenstoff-Atomen, Phenylen oder Alkenylen mit 2 bis 6 Kohlenstoff-Atomen darstellt,
Y₁₇ Alkylen mit 2 bis 10 Kohlenstoff-Atomen, Phenylen oder Alkylphenylen mit 1 bis 11 Kohlenstoff-Atomen in der Alkyl-Einheit darstellt, und
Y₁₈ Alkylen mit 2 bis 10 Kohlenstoff-Atomen oder Alkylen, das 4 bis 20 Kohlenstoff-Atome aufweist und ein- oder mehrere Male unterbrochen ist durch Sauerstoff, darstellt;
in den Verbindungen der Formel (IV) x eine ganze Zahl von 1 bis 3 ist und die Substituenten L unabhängig voneinander Wasserstoff, Alkyl, Alkoxy oder Alkylthio mit in jedem Fall 1 bis 22 Kohlenstoff-Atomen, Phenoxy oder Phenylthio darstellen.

7. Verfahren nach Anspruch 1, wobei die Beschichtung auf Lösungsmittel basiert oder auf Wasser basiert und ein Bindemittel, das ausgewählt ist aus der Gruppe, bestehend aus Alkyd-Harzen, modifizierten Alkyd-Harzen, Alkyd-Urethan-Harzen, Alkyd-Silicon-Harzen, selbst-vernetzenden oder nicht-selbst-vernetzenden Acryl-Harzen, Polyester-Harzen, trocknenden Ölen, phenolischen Harzen und Nitrocellulose oder Gemischen davon, enthält.

8. Verfahren nach Anspruch 7, wobei die Beschichtung auf Wasser basiert und ein Acryl- oder Methacryl-Harz enthält.

9. Verfahren nach Anspruch 1, wobei die Menge an organischem UV-Absorptionsmittel von 0,5 % bis 5 Gew.-%, bezogen auf das Gewicht von der gesamten Bindemittel-Formulierung, beträgt.

10. Verfahren nach Anspruch 1, wobei die Menge an anorganischem UV-Absorptionsmittel von 0,002 % bis 0,5 Gew.-%, bezogen auf das Gewicht von der gesamten Bindemittel-Formulierung, beträgt.

11. Verfahren nach Anspruch 1, wobei die Beschichtung einen zusätzlichen Stabilisator, ausgewählt aus der Gruppe, bestehend aus einem sterisch gehinderten Amin-Licht-Stabilisator, einem Phosphit oder Phosphonit und sterisch gehindertem phenolischem Antioxidans oder Gemischen davon, enthält.

12. Verfahren nach Anspruch 1, wobei das Kork- oder Holz-Substrat mit einer wässrigen und/oder organischen Lösung von
bb) Bis-(1-oxyl-2,2,6,6-tetramethyl-piperidin-4-yl)-sebacat;
cc) Bis-(1-hydroxy-2,2,6,6-tetramethyl-piperidin-4-yl)-sebacat;
dd) 1-Hydroxy-2,2,6,6-tetramethyl-4-acetoxypiperidinium-citrat;
ee) 1-Oxyl-2,2,6,6-tetramethyl-4-acetamidopiperidin;
ff) 1-Hydroxy-2,2,6,6-tetramethyl-4-acetamidopiperidin;
gg) 1-Hydroxy-2,2,6,6-tetramethyl-4-acetamidopiperidinium-bisulfat;
hh) 1-Oxyl-2,2,6,6-tetramethyl-4-oxo-piperidin;
ii) 1-Hydroxy-2,2,6,6-tetramethyl-4-oxo-piperidin;
jj) 1-Hydroxy-2,2,6,6-tetramethyl-4-oxo-piperidinium-acetat;
kk) 1-Oxyl-2,2,6,6-tetramethyl-4-methoxy-piperidin;
11) 1-Hydroxy-2,2,6,6-tetramethyl-4-methoxy-piperidin;
mm) 1-Hydroxyl-2,2,6,6-tetramethyl-4-methoxy-piperidinium-acetat;
nn) 1-Oxyl-2,2,6,6-tetramethyl-4-acetoxypiperidin;
oo) 1-Hydroxy-2,2,6,6-tetramethyl-4-acetoxy-piperidin;
pp) 1-Oxyl-2,2,6,6-tetramethyl-4-propoxy-piperidin;
qq) 1-Hydroxy-2,2,6,6-tetramethyl-4-propoxy-piperidinium-acetat;
rr) 1-Hydroxy-2,2,6,6-tetramethyl-4-propoxy-piperidin;
ss) 1-Oxyl-2,2,6,6-tetramethyl-4-(2-hydroxy-4-oxapentoxy)-piperidin;
tt) 1-Hydroxy-2,2,6,6-tetramethyl-4-(2-hydroxy-4-oxapentoxy)-piperidinium-acetat;
uu) 1-Oxyl-2,2,6,6-tetramethyl-4-hydroxypiperidin;
vv) 1-Hydroxy-2,2,6,6-tetramethyl-4-hydroxypiperidin;
ww) 1-Hydroxy-2,2,6,6-tetramethyl-4-hydroxypiperidinium-chlorid;
xx) 1-Hydroxy-2,2,6,6-tetramethyl-4-hydroxypiperidinium-acetat;
yy) 1-Hydroxy-2,2,6,6-tetramethyl-4-hydroxypiperidinium-bisulfat;
zz) 1-Hydroxy-2,2,6,6-tetramethyl-4-hydroxypiperidinium-citrat;
aaa) Bis-(1-hydroxy-2,2,6,6-tetramethyl-4-hydroxy-piperidinium)-citrat;
bbb) Tris-(1-hydroxy-2,2,6,6-tetramethyl-4-hydroxy-piperidinium)-citrat;
bb) Tetra-(1-hydroxy-2,2,6,6-tetramethyl-4-hydroxy-piperidinium)-ethylendiamin-tetraacetat;
(cc) Tetra-(1-hydroxy-2,2,6,6-tetramethyl-4-acetamidopiperidinium)-ethylendiamin-tetraacetat;
(dd) Tetra-(1-hydroxy-2,2,6,6-tetramethyl-4-oxopiperidinium)-ethylendiamin-tetraacetat;
(ee) Penta-(1-hydroxy-2,2,6,6-tetramethyl-4-hydroxy-piperidinium)-diethylentriamin-pentaacetat;
(ff) Penta-(1-hydroxy-2,2,6, 6-tetramethyl-4-acetamido-piperidinium)-diethylentriamin-pentaacetat;
(gg) Penta-(1-hydroxy-2,2,6,6-tetramethyl-4-oxo-piperidinium)-diethylentriamin-pentaacetat;
(hh) Tri-(1-hydroxy-2,2,6,6-tetramethyl-4-hydroxy-piperidinium)-nitrilotriacetat;
(ii) Tri-(1-hydroxy-2,2,6,6-tetramethyl-4-acetamido-piperidinium)-nitrilotriacetat;
(jj) Tri-(1-hydroxy-2,2,6,6-tetramethyl-4-oxo-piperidinium)-nitrilotriacetat;
(kk) Penta-(1-hydroxy-2,2,6,6-tetramethyl-4-hydroxy-piperidinium)-diethylentriamin-pentamethylen-phosphonat;
(11) Penta-(1-hydroxy-2,2,6,6-tetramethyl-4-acetamido-piperidinium)-diethylentriamin-pentamethylen-phosphonat;
(mm) Penta-(1-hydroxy-2,2,6,6-tetramethyl-4-oxo-piperidinium)-diethylentriamin-pentamethylen-phosphonat oder Gemischen davon
vorbehandelt wurde.

13. Verfahren nach Anspruch 12, wobei das Kork- oder Holz-Substrat mit einer wässrigen und/oder organischen Lösung von 1-Oxyl-2,2,6,6-tetramethyl-4-hydroxypiperidin vorbehandelt wurde.

14. Verwendung einer Kombination von einem organischen UV-Absorptionsmittel, ausgewählt aus der Gruppe, bestehend aus den Hydroxybenzophenon-, Hydroxyphenylbenzotriazol-, Oxanilid- und Hydroxyphenyltriazin-UV-Absorptionsmitteln oder Gemischen davon; und einem anorganischen UV-Absorptionsmittel, ausgewählt aus der Gruppe, bestehend aus transparentem Eisenoxid, transparentem Titandioxid, transparentem Zinkoxid, transparentem Ceroxid und Ruß oder Gemischen davon; in einem Gewichtsverhältnis von organischem UV-Absorptionsmittel zu anorganischem UV-Absorptionsmittel von 1000 : 1 bis 10 : 1 zum Schützen von Kork- oder Holz-Substraten vor Verfärbung, wobei das Holz-Substrat aus der Gruppe, bestehend aus Buche, Erle, Meranti, Eiche, Kirsche, Teak, Nuss, Rotholz, Mahagoni, Eukalyptus, Amerikanischer Buche, Durian, Roter Zeder, Leichhardt-Baum, Champa, Kautschuk-Baum-Holz, Taiwan-Esche, Campher-Baum, Zebra-Holz, Makamong-Baum, Rosen-Holz, Regen-Baum und Eisen-Holz, ausgewählt ist.

## Revendications

1. Un procédé pour protéger des substrats en bois ou liège de la décoloration
dans laquelle le substrat en bois est choisi dans le groupe formé par le bois de hêtre, d'aune, de mérandier, de chêne, de cerisier, de teck, de séquoia, d'acajou, d'eucalyptus, de hêtre à grandes feuilles, de durian, d'acrocarpus, de leichhardt, de champa, de caoutchoutier, de frêne taiwanais, de camphrier, de zingana, de makha, de bois de rose, d'arbre à pluie et d'achiménes;
comprenant l'application au substrat de bois ou de liège, d'un revêtement, lequel revêtement contient:
a) un agent d'absorption des UV organique choisi dans le groupe formé par les agents d'absorption des UV consistant en hydroxybenzophénone, hydroxyphényl-benzotriazole, oxanilide et hydroxyphényltriazine ou leurs mélanges; et
b) un agent d'absorption des UV organique choisi dans le groupe formé par l'oxyde de fer transparent, le dioxyde de titane transparent, l'oxyde de zinc transparent, l'oxyde de cérium transparent et le noir de carbone ou leurs mélanges,
où le rapport pondéral agent d'absorption des UV organique/agent d'absorption des UV organique est comprise entre 1000/1 et 10/1.

2. Un procédé selon la revendication 1, dans lequel le substrat en bois est choisi dans le groupe formé par le bois de hêtre, d'aune, de mérandier, de chêne, de cerisier, de teck, de séquoia et d'acajou.

3. Un procédé selon la revendication 1, dans lequel le substrat est du liège ou du bois d'aune.

4. Un procédé selon la revendication 1, dans lequel le substrat est du liège.

5. Un procédé selon la revendication 1, dans lequel l'agent d'absorption des UV organique est un oxyde de fer transparent ou du noir de carbone ou un de leurs mélanges.

6. Un procédé selon la revendication 1, dans lequel:
l'hydroxybenzophénone présente la formule 1 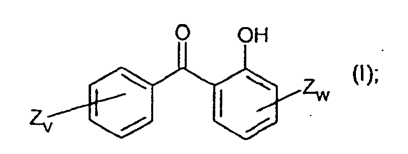
le 2-hydroxyphénylbenzotriazole présente les formules IIa, IIb ou IIc 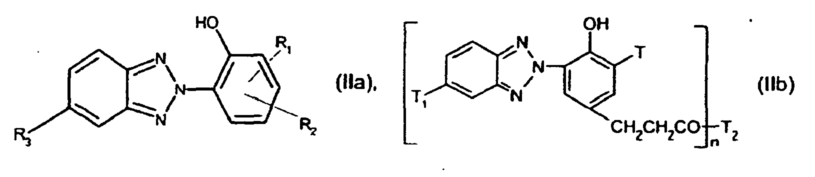 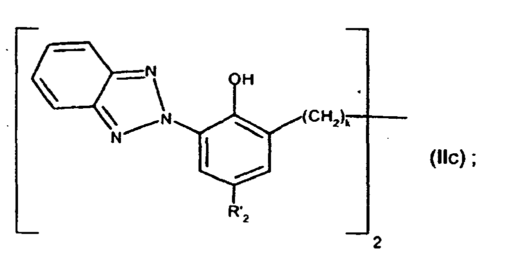
le 2-hydroxyphényltriazine présente la formule III 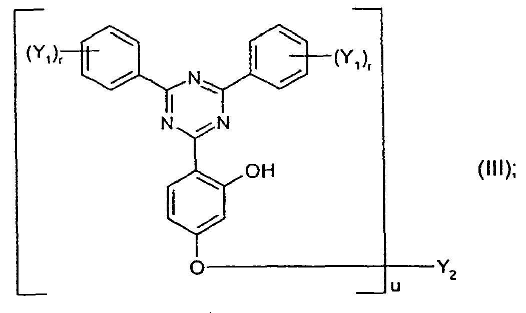
et l'oxanilide présente la formule (IV) 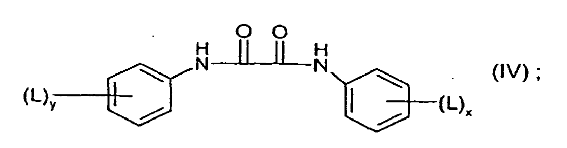
où
dans les composés présentant la formule (I)
v est un nombre entier compris entre 1 et 3,
w est 1 ou 2 et
les substituants Z, indépendants les uns des autres, sont des atomes d'hydrogène ou d'halogène, un groupe hydroxyl ou un radical alkoxy comportant 1 à 12 atomes de carbone;
dans les composés présentant la formule (IIa),
R₁ est de l'hydrogène, un radical alkyl comportant 1 à 24 atomes de carbone, un radical phénylalkyl comportant 1 à 4 atomes de carbone dans la partie alkyl, un radical cycloalkyl comportant 5 à 8 atomes de carbone ou un radical de formule 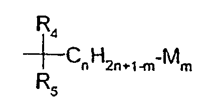 dans laquelle les substituants:
R₄ et R₅, indépendants les uns des autres, sont des radicaux alkyl comportant, dans chaque cas, 1 à 5 atomes de carbone, ou R₄, avec le radical CₙH₂₊₁₋ₘ-, forme un radical cycloalkyl comportant 5 à 12 atomes de carbone,
m est 1 ou 2,
n est un nombre entier compris entre 2 et 20 et
M est un radical de formule -COOR₆ dans laquelle R₆ est de l'hydrogène, un radical alkyl comportant 1 à 12 atomes de carbone, un radical alkoxyalkyl comportant 1 à 20 atomes de carbone dans la partie alkyl et dans la partie alkoxy ou un radical phénylalkyl comportant 1 à 4 atomes de carbone dans la partie alkyl,
R₂ est de l'hydrogène, un halogène, un radical alkyl comportant 1 à 18 atomes de carbone ou un radical phénylalkyl comportant 1 à 4 atomes de carbone dans la partie alkyl, et
R₃ est de l'hydrogène, du chlore, un radical alkyl ou un radical alkoxy comportant 1 à 4 atomes de carbone ou un radical -COOR₆ dans lequel R₆ est tel que défini ci-dessus, au moins l'un des radicaux R₁ et R₂ étant autre que de l'hydrogène;
dans les composés présentant la formule (IIb)
T est de l'hydrogène ou un radical alkyl comportant 1 à 6 atomes de carbone,
T₁ est de l'hydrogène, du chlore, un radical alkyl ou un radical alkoxy comportant 1 à 4 atomes de carbone,
n est 1 ou 2 et,
si n est égal à 1,
T₂ est du chlore ou un radical de formule -OT₃ ou 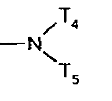 et, si n est égal à 2,
T₂ est un radical de formule 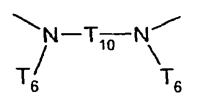 or -O-T₉-O-; où
T₃ est de l'hydrogène, un radical alkyl comprenant 1 à 18 atomes de carbone et qui est non substitué ou substitué par 1 à 3 groupes hydroxyl ou par un groupe -OCOT₆, un radical alkyl comportant 3 à 18 atomes de carbone, qui est inter-rompu une à plusieurs fois par -O- ou -NT₆ - et qui est non substitué ou substitué par un groupe hydroxyl ou -OCOT6, un radical cycloalkyl comportant 5 à 12 atomes de carbone et qui est non substitué ou substitué par un groupe hydroxyl et/ou alkyl comportant 1 à 4 atomes de carbone, un radical alkényl comportant 2 à 18 atomes de carbone et qui est non substitué ou substitué par un groupe hydroxyl, un radical phénylalkyl comportant 1 à 4 atomes de carbone dans la partie alkyl ou un radical de formule -CH₂CH(OH)- T₇ ou 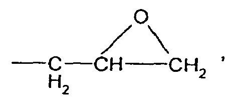
- T₄ et T₅, indépendants les uns des autres, sont de l'hydrogène, un radical alkyl comportant 1 à 18 atomes de carbone, un radical alkyl comportant 3 à 18 atomes de carbone et qui est interrompu une à plusieurs fois par -O- ou -NT₆-, un radical cycloalkyl comportant 5 à 12 atomes de carbone, un radical phényl, un radical phényl qui est substitué par un radical alkyl comportant 1 à 4 atomes de carbone, un radical alkényl comportant 3 à 8 atomes de carbone, un radical phénylalkyl comportant 1 à 4 atomes de carbone dans la partie alkyl ou hydroxyalkyl comportant 2 à 4 atomes de carbone,
- T₆ est de l'hydrogène, un radical alkyl comportant 1 à 18 atomes de carbone, un radical cycloalkyl comportant 5 à 12 atomes de carbone, un radical alkényl comportant 3 à 8 atomes de carbone, un radical phényl, un radical phényl qui est substitué par un radical alkyl comportant 1 à 4 atomes de carbone, un radical phénylalkyl comportant 1 à 4 atomes de carbone dans la partie alkyl,
- T₇ est de l'hydrogène, un radical alkyl comportant 1 à 18 atomes de carbone, un radical phényl qui est non substitué ou substitué par un groupe hydroxyl, un radical phénylalkyl comportant 1 à 4 atomes de carbone dans la partie alkyl, ou-CH₂OT_{8,}
- T₈ est un radical alkyl comportant 1 à 18 atomes de carbone, un radical alkényl comportant 3 à 8 atomes de carbone, un radical cycloalkyl comportant 5 à 10 atomes de carbone, un radical phényl, un radical phényl qui est substitué par un radical alkyl comportant 1 à 4 atomes de carbone, ou un radical phénylalkyl comportant 1 à 4 atomes de carbone dans la partie alkyl,
- T₉ est un radical alkylène comportant 2 à 8 atomes de carbone, un radical alkénylène comportant 4 à 8 atomes de carbone, un radical alkynylène comportant 4 atomes de carbone, un radical cyclohexylène, un radical alkylène comportant 2 à 8 atomes de carbone et qui est interrompu une à plusieurs fois par -O-, ou un radical de formule -CH₂CH(OH)CH₂OT₁₁OCH₂CH(OH)CH₂ ou -CH₂-C(CH₂OH)₂CH₂-,
- T₁₀ est un radical alkylène comportant 2 à 20 atomes de carbone et peut être interrompu une à plusieurs fois par -O-, ou un radical cyclohexylène,
-T₁₁ est un radical alkylène comportant 2 à 8 atomes de carbone, alkylène comportant 2 à 18 atomes de carbone et est interrompu une à plusieurs fois par -O-, 1,3-cyclohexylène, 1,4-cyclohexylène, 1,3-phénylène ou 1,4-phénylène, ou
- T₁₀ et T₆, avec les deux atomes d'azote forment un noyau pipérazine, dans les composés présentant la formule (IIc)
R'₂ est (C₁-C₁₂)-alkyl et
k est un nombre compris entre 1 et 4;
dans les composés présentant la formule (III)
u est 1 ou 2 et
r est un nombre entier compris entre 1 et 3,
les substituants Y₁, indépendants les uns des autres, sont de l'hydrogène, un groupe hydroxyl, un halogène, un radical phényl, un radical halogénométhyl, un radical alkyl comportant 1 à 12 atomes de carbone, un radical alkoxy comportant 1 à 18 atomes de carbone, un radical alkoxy comportant 1 à 18 atomes de carbone qui est substitué par un groupe -COO-(C₁-C₁₈)-alkyl);
si u est égal à 1,
Y₂ est un radical alkyl comportant 1 à 18 atomes de carbone, un radical phényl qui est non substitué ou substitué par un groupe hydroxyl, un halogène, un radical alkyl ou alkoxy comportant 1 à 18 atomes de carbone, alkyl comportant 1 à 12 atomes de carbone et est substitué par -COOH, -COOY₈, -CONH₂, -CONHY₉, -CONY₉Y₁₀, -NH₂, -NHY₉, -NY₉Y₁₀, -NHCOY₁₁, -CN et/ou -OCOY₁₁, un radical alkyl comportant 4 à 20 atomes de carbone, qui est interrompu par un ou plusieurs atomes d'oxygène et est non substitué ou substitué par un groupe hydroxyl ou alkoxy comportant 1 à 12 atomes de carbone, un radical alkényl comportant 3 à 6 atomes de carbone, un radical glycidyl, un radical cyclohexyl qui est non substitué ou substitué par un groupe hydroxyl, un radical alkyl comportant 1 à 4 atomes de carbone et/ou -COY₁, un radical phénylalkyl comportant 1 à 5 atomes de carbone dans la partie alkyl et est non substitué ou substitué par un groupe hydroxyl, du chlore et/ou un radical méthyl, -COY₁₂ ou -SO₂Y₁₃, ou,
si u est égal à 2,
Y₂ est un radical alkylène comportant 2 à 16 atomes de carbone, un radical alkénylène comportant 4 à 12 atomes de carbone, un radical xylylène, un radical alkylène comportant 3 à 20 atomes de carbone, est interrompu par un ou plusieurs atomes -O- et/ou est substitué par un groupe hydroxyl, -CH₂CH(OH)CH₂-O-Y₁₅-OCH₂CH(OH)CH₂, -CO-Y₁₆-CO-, -CO-NH-Y₁₇-NH-CO- ou -(CH₂)ₘ-CO₂-Y₁₈-OCO-(CH₂)ₘ, dans lequel
m est 1, 2 ou 3,
Y₈ est un radical alkyl comportant 1 à 18 atomes de carbone, un radical alkényl comportant 3 à 18 atomes de carbone, un radical alkyl comportant 3 à 20 atomes de carbone, qui est interrompu par un ou plusieurs atomes d'oxygène ou de soufre ou par -NT₆- et/ou est substitué par un groupe hydroxyl, un radical alkyl comportant 1 à 4 atomes de carbone et est substitué par -P(O)(OY₁₄)₂, -NY₉Y₁₀ ou
-OCOY₁₁ et/ou hydroxyl, un radical alkényl comportant 3 à 18 atomes de carbone, un radical glycidyl ou un radical phénylalkyl comportant 1 à 5 atomes de carbone dans la partie alkyl,
Y₉ et Y₁₀, indépendants les uns des autres, sont un radical alkyl comportant 1 à 12 atomes de carbone, un radical alkoxyalkyl comportant 3 à 12 atomes de carbone, un radical dialkylaminoalkyl comportant 4 à 16 atomes de carbone ou un radical cyclohexyl comportant 5 à 12 atomes de carbone,
ou Y₉ et Y₁₀ forment ensemble un radical alkylène, un radical oxaalkylène ou un radical azaalkylène comportant 3 à 9 atomes de carbone,
Y₁₁, est un radical alkyl comportant 1 à 18 atomes de carbone, un radical alkényl comportant 2 à 18 atomes de carbone ou un radical phényl,
Y₁₂ est un radical alkyl comportant 1 à 18 atomes de carbone, un radical alkényl comportant 2 à 18 atomes de carbone, un radical phényl, un radical alkoxy comportant 1 à 12 atomes de carbone, un radical phénoxy, un radical alkylamino comportant 1 à 12 atomes de carbone ou un radical phénylamino,
Y₁₃ est un radical alkyl comportant 1 à 18 atomes de carbone, un radical phényl ou un radical alkylphényl comportant 1 à 8 atomes de carbone dans le radical alkyl,
Y₁₄ est un radical alkyl comportant 1 à 12 atomes de carbone ou un radical phényl,
Y₁₅ est un radical alkylène comportant 2 à 10 atomes de carbone, un radical phénylène ou un radical -phénylène-M-phénylène- dans lequel M est -O-, -S-, -SO₂-, -CH₂- ou -C(CH₃)₂-,
Y₁₆ est un radical alkylène, un radical oxaalkylène ou un radical thiaalkylène comportant 2 à 10 atomes de carbone, un radical phénylène ou un radical alkénylène comportant 2 à 6 atomes de carbone,
Y₁₇ est un radical alkylène comportant 2 à 10 atomes de carbone, un radical phénylène ou un radical alkylphénylène comportant 1 à 11 atomes de carbone dans la partie alkyl, et
Y₁₈, est un radical alkylène comportant 2 à 10 atomes de carbone ou un radical alkylène comportant 4 à 20 atomes de carbone et est interrompu une à plusieurs fois par un atome d'oxygène;
dans les composés présentant la formule (IV)
x est un nombre entier compris entre 1 et 3 et
les substituants L, indépendants les uns des autres, consistent en hydrogène, un radical alkyl, un radical alkoxy ou un radical alkylthio comportant 1 à 22 atomes de carbone,un radical phénoxy ou un radical phénylthio.

7. Un procédé selon la revendication 1, dans lequel le revêtement est à base de solvant ou à base d'eau et contient un liant, qui est choisi dans le groupe formé par les résines alkydes, les résines alkydes modifiées,les résines alkydes-uréthane, les résines alkydes-silicone, les résines acryliques autoréticulantes ou non-autoréticulantes, les résines polyester, les huiles siccatives, les résines phénoliques et la nitrocellulose ou leurs mélanges.

8. Un procédé selon la revendication 7, dans lequel le revêtement est à base d'eau et contient une résine acrylique ou méthacrylique.

9. Un procédé selon la revendication 1, dans lequel la quantité d'agent d'absorption des UV organique est comprise entre 0,5% et 5% en poids exprimés par rapport au poids total de la formulation de liant.

10. Un procédé selon la revendication 1, dans lequel la quantité d'agent d'absorption des UV inorganique est comprise entre 0,002% et 0,5% en poids exprimés par rapport au poids total de la formulation de liant.

11. Un procédé selon la revendication 1, dans lequel le revêtement est un stabilisant supplémentaire choisi dans le groupe formé par les photostabilisants à base d'amines à encombrement stérique, les phosphites ou les phosphonites et les antioxydants à base phénoliques à encombrement stérique ou leurs mélanges.

12. Un procédé selon la revendication 1, dans lequel le substrat de bois ou de liège a subi un prétraitement par une solution aqueuse et/ou organique de:
bb) bis(1-oxyl-2,2-6-6-tétraméthylpipéridin-4-yl) sébacate;
cc) bis(1-hydroxy-2,2-6-6-tétraméthylpipéridin-4-yl) sébacate;
dd) citrate de 1-hydroxy-2,2-6-6-tétraméthyl-4-acetoxypipéridinium;
ee) 1-oxyl-2,2,6,6-tétraméthyl-4-acetamidopipéridine;
ff) 1-hydroxy-2,2,6,6-tétraméthyl-4-acetamidopipéridine;
gg) bisulfate de 1-hydroxy-2,2,6,6-tétraméthyl-4-acetamidopipéridinium;
hh) 1-oxyl-2,2,6,6-tétraméthyl-4-oxo-pipéridine;
ii) 1-hydroxy -2,2,6,6-tétraméthyl-4-oxo-pipéridine;
jj) acétate de 1-hydroxy -2,2,6,6-tétraméthyl-4-oxo-pipéridinium;
kk) 1-oxyl-2,2,6,6-tétraméthyl-4-methoxy-pipéridine;
11) 1-hydroxy-2,2,6,6-tétraméthyl-4-methoxy-pipéridine;
mm) acétate de 1-hydroxyl-2,2,6,6-tétraméthyl-4-methoxy-pipéridinium;
nn) 1-oxyl-2,2,6,6-tétraméthyl-4-acetoxypipéridine;
oo) 1-hydroxy-2,2,6,6-tétraméthyl-4-acetoxypipéridine;
pp) 1-oxyl-2,2,6,6-tétraméthyl-4-propoxy-pipéridine;
qq) acétate de 1-hydroxy-2,2,6,6-tétraméthyl-4-propoxy-pipéridinium;
rr) 1-hydroxy-2,2,6,6-tétraméthyl-4-propoxy-pipéridine;
ss) 1-oxyl-2,2,6,6-tétraméthyl-4-(2-hydroxy-4-oxapentoxy)-pipéridine;
tt) acétate de 1-hydroxy-2,2,6,6-tétraméthyl-4-(2-hydroxy-4-oxapentoxy)-pipéridinium;
uu) 1-oxyl-2,2,6,6-tétraméthyl-4-hydroxypipéridine;
vv) 1-hydroxy-2,2,6,6-tétraméthyl-4-hydroxypipéridine;
ww) chlorure de 1-hydroxy-2,2,6,6-tétraméthyl-4-hydroxypipéridinium;
xx) acétate de 1-hydroxy-2,2,6,6-tétraméthyl-4-hydroxypipéridinium;
yy) bisulfate de 1-hydroxy-2,2 ,6,6-tétraméthyl-4-hydroxypipéridinium;
zz) citrate de 1-hydroxy-2,2,6,6-tétraméthyl-4-hydroxypipéridinium;
aaa) citrate de bis-(1-hydroxy-2,2,6,6-tétraméthyl-4-hydroxypipéridinium);
bbb) citrate de tris(1-hydroxy-2,2,6,6-tétraméthyl-4-hydroxypipéridinium);
bb) tétraacétate de tétra(1-hydroxy-2,2,6,6-tétraméthyl-4-hydroxypipéridinium) éthyléne-diamine;
(cc) tétraacétate de tétra (1-hydroxy-2,2,6,6-tétraméthyl-4-acetamidopipéridinium) éthyléne diamine;
(dd) tétraacétate de tétra(1-hydroxy-2 ,2,6,6-tétraméthyl-4-oxopipéridinium) éthyléne diamine-;
(ee) diéthyléne-triamine pentaacétate de penta(1-hydroxy-2,2,6,6-tétraméthyl-4-hydroxypipéridinium);
(ff) triaminepentaacétate de penta(1-hydroxy-2,2,6,6-tétraméthy1-4-acetamido-pipéridinium) diéthyléne;
(gg) pentaacétate de penta(1-hydroxy-2 ,2,6,6-tétraméthyl-4-oxopipéridinium) diéthylénetriamine;
(hh) nitrilotriacétate de tri(1-hydroxy-2,2,6,6-tétraméthyl-4-hydroxypipéridinium);
(ii) nitrilotriacétate de tri(1-hydroxy-2,2,6,6-tétraméthyl-4-acetamidopipéridinium);
(jj) nitrilotriacétate de tri(1-hydroxy-2,2,6,6-tétraméthyl-4-oxopipéridinium);
(kk) pentaméthylène-phosphonate de penta (1-hydroxy-2,2,6,6-tétraméthyl-4-hydroxypipéridinium) diéthyléne-triamine;
(ll) pentaméthylène-phosphonate de penta-(1-hydroxy-2,2,6,6-tétraméthyl-4-acét-amidopipéridinium) diethylène-triamine;
(mm) pentaméthylène-phosphonate de penta-(1-hydroxy-2,2,6,6-tétraméthyl-4-oxopipéridinium) diéthyléne-triamine
ou leurs mélanges.

13. Un procédé selon la revendication 12, dans laquelle le substrat de bois
ou de liège a été prétraité par une solution aqueuse et/ou organique de 1-oxyl-2,2,6,6-tétraméthyl-4-hydroxypipéridine.

14. Utilisation d'une combinaison d'un agent d'absorption des UV organique choisi dans le groupe formé par les agents d'absorption des UV consistant en hydroxybenzophénone, hydroxyphényl-benzotriazole, oxanilide, hydroxyphényltriazine,
ou leurs mélanges; et un agent d'absorption des UV organique choisi dans le groupe formé par l'oxyde de fer transparent, le dioxyde de titane transparent, l'oxyde de zinc transparent, l'oxyde de cérium transparent et le noir de carbone ou leurs mélanges;
dans rapport pondéral agent d'absorption des UV organique/agent d'absorption des UV organique compris entre 1000/1 et 10/1 pour la protection de substrats de bois ou de liège de la décoloration dans laquelle le substrat en bois est choisi dans le groupe formé par le bois de hêtre, d'aune, de meranti, de chêne, de cerisier, de teck, de séquoia, d'acajou, d'eucalyptus, de hêtre à grandes feuilles, de durian, d'acrocarpus, de leichhardt, de champa, de caoutchoutier, de frêne taiwanais, de camphrier, de zingana, de makha, de bois de rose, d'arbre de pluie et d'achimènes.
